# EUROPÄISCHE PATENTSCHRIFT

(11) **EP 4 249 950 B1**
(45) Veröffentlichungstag und Bekanntmachung des Hinweises auf die Patenterteilung: **13.03.2024**
(21) Anmeldenummer: 22164402.4
(22) Anmeldetag: 25.03.2022
(51) Int. Cl.: G01S 7/487, G01S 17/42

(54) **ERFASSUNG UND ABSTANDSBESTIMMUNG EINES OBJEKTS**
DETECTION OF AN OBJECT AND DISTANCE MEASUREMENT
DÉTECTION ET DÉTERMINATION DE LA DISTANCE D'UN OBJET

(43) Veröffentlichungstag der Anmeldung: 27.09.2023
(73) Patentinhaber: SICK AG, 79183 Waldkirch (DE)
(72) Erfinder: Marra, Martin, 79280 Au (DE); Clemens, Klaus, 79367 Weisweil (DE); Kerp, Michael, 79183 Waldkirch (DE)

(56) Entgegenhaltungen:
- EP-B1- 3 770 633
- WO-A1-2021/036567
- WO-A1-2021/213013
- DE-A1-102014 209 629
- DE-A1-102018 109 014
- US-A1- 2020 209 356
- US-B2- 10 830 881

## Beschreibung

Die Erfindung betrifft einen entfernungsmessenden optoelektronischen Sensor und ein Verfahren zur Erfassung und Abstandsbestimmung eines Objekts in einem Überwachungsbereich nach dem Oberbegriff von Anspruch 1 beziehungsweise 11.

Für eine optische Entfernungsbestimmung wird oftmals die Laufzeit eines Lichtsignals gemessen, die über die Lichtgeschwindigkeit der Entfernung entspricht. Nach dem Tastprinzip wird ein Lichtstrahl in den Überwachungsbereich ausgesandt und der von Objekten zurückgeworfene Lichtstrahl wieder empfangen, um dann das Empfangssignal elektronisch auszuwerten. Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen. Ein Mehrlagenscanner wird beispielsweise in EP 3 518 000 A1 beschrieben.

Um aus dem zu erfassenden Empfangslicht ein elektrisches Signal zu erzeugen, genügt die Nachweisempfindlichkeit einfacher Photodioden in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt so lange für weitere Messungen aus. Deshalb ist es üblich, mehrere SPADs zusammenzuschalten und statistisch auszuwerten. Eine Bezeichnung für einen Lichtempfänger mit mehreren zusammengeschalteten SPADs bei Ausgabe eines Summensignals ist SiPM (Silicon Photo Multiplier), wobei Silizium nur der gängige, nicht aber einzige zugrundeliegende Halbleiter ist.

Durch eine Lichtlaufzeitmessung mit kurzen Pulsen ist eine sehr hohe Auflösung und Messgenauigkeit erreichbar. Durch Auslösen der SPAD-Zellen beispielsweise in einem SiPM entsteht als Ausgangssignal eine schnelle Flanke, die üblicherweise für die Distanzmessung genutzt wird. Sofern eine entsprechende hochfrequenztaugliche Empfangselektronik vorhanden ist, können die Empfangspulse präzise in der Zeit lokalisiert werden.

Ein SPAD-basierter Lichtempfänger deckt einen hohen Dynamikbereich ab. Hat eine Zelle einmal ausgelöst, so trägt sie ihren Lawinenstrom bei und geht dann in die Totzeit über. Etwas vereinfachend ausgedrückt reagieren bereits ab einer gewissen Remission eines angetasteten Objekts in einem gewissen Abstand nahezu alle Zellen mit ihrem Lawinenstrom, so dass ein noch stärkeres Lichtsignal beispielsweise von einem Reflektor beziehungsweise einem näheren Objekt kaum noch zusätzlichen Zellen rekrutieren kann. Daraus ergibt sich eine inhärente Dynamikkompression.

Diese Dynamikkompression ist einerseits erwünscht, weil sie das Übersteuern nachfolgender Stufen und damit eine Verzerrung des Empfangssignals verhindert. Allerdings geht dadurch auch Information über die Signalform und Signalstärke des einfallenden Lichts verloren. Die Amplitude des elektronischen Empfangssignals entspricht nur sehr eingeschränkt der Intensität des Lichts, nämlich in einem Bereich schwächerer Signale, bei denen noch ausreichend freie Zellen zur Verfügung stehen. Deshalb lässt sich auf diesem Weg beispielsweise ein Reflektor nicht von einem weißen Ziel unterscheiden. Außerdem ist ohne Kenntnis der Signalstärke natürlich auch nicht möglich, hieraus Korrekturgrößen für die gemessene Lichtlaufzeit abzuleiten.

Es ist bekannt, zusätzlich zu einer Lichtlaufzeit weitere Größen wie eine Pulsbreite oder Intensität zu messen, um so die Lichtlaufzeit nochmals zu korrigieren. Beispielsweise wird in Laserscannern die Pulsbreite als Zeitintervall zwischen Übersteigen und Unterschreiten einer Schwelle bestimmt. In der EP 1 972 961 A2 wird in einem Pulsmittelungsverfahren aus mehreren Einzelpulsen ein Histogramm aufgebaut und darin ein Maximum oder ein Integral als Maß für die Intensität bestimmt. Die EP 3 059 608 A1 bestimmt den Empfangspegel eines Laserscanners in der Versorgung des Lichtempfängers. Alle diese Ansätze sind aber nicht für SPAD-basierte Lichtempfänger oder SiPMs geeignet, denn sie werten die Amplitude des Empfangssignals aus, die aber wie erläutert aufgrund der Dynamikkompression den Signalverlauf nicht treu genug abbildet.

Es gibt noch zwei weitere Effekte, die eine Anzahl jeweils noch für die Erfassung zur Verfügung stehender Zellen begrenzen und die den Verlauf des Empfangssignals beeinflussen. Zum einen neigen SPAD-basierte Lichtempfänger, insbesondere im Infrarotbereich empfindliche SiPMs, zu einem sogenannten Nachpulsen. In diesem Wellenlängenbereich wird eine tief im Material befindliche Driftzone benötigt, in der die Lebensdauer der Ladungsträger mitunter länger ist als die Totzeit der SPAD-Zellen. Nach dem Wiederaufladen können insbesondere nach starken Empfangspulsen noch verbleibende Ladungsträger die Zelle sofort erneut auslösen, ohne dass überhaupt Licht einfällt. Das Nachpulsen wird im Stand der Technik als Störeffekt betrachtet und möglichst gering gehalten, wie etwa in der DE 10 2017 118 307 A1 oder der KR 101 381 392 B1. In der EP 3 441 787 A1 wird der Nachpuls wie sonstiges Rauschen behandelt und soll durch mehrere SPAD-Pixel ausgemittelt werden.

Zum anderen kann auf den Lichtempfänger fallendes Fremdlicht bereits einen durchaus nennenswerten Anteil der Zellen rekrutieren. Das Fremdlicht erzeugt Schrotrauschen, das das Rauschen insgesamt dominiert. Wegen der hohen internen Verstärkung eines SPAD-basierten Lichtempfängers oder SiPMs tragen nachgeschaltete Verstärker kaum noch bei. Bei der Lichtlaufzeitmessung wird üblicherweise ein Empfangspeak lokalisiert, um daraus den Empfangszeitpunkt abzuleiten. Ob sich ein Empfangs- oder Nutzlichtpeak aus dem Rauschen erhebt, wird mit einer Schwelle beurteilt. Ohne die Schwelle oder bei falsch gesetzter Schwelle wird ein Empfangszeitpunkt fälschlich aus einem Rauschereignis abgeleitet. Die Höhe der Schwelle hängt beispielsweise von der angestrebten Messdauer ohne Fehlmessung durch ein Rauschereignis oder bei einem statistischen Messverfahren oder Pulsmittelungsverfahren von der Anzahl der Lichtpulse ab, die zu einem Messwert beitragen. Die Auslegung der Schwelle richtet sich üblicherweise an dem schlechtesten Fall eines weißen Ziels unter maximalem Fremdlicht aus. Da jedoch der Rauschterm bei dunkeln Zielen mit der Wurzel der Remission kleiner wird, reduziert sich die maximale Reichweite bei einer solchen konstanten Schwelle unnötig stark.

Die EP 3 339 887 B1 offenbart einen Lichtempfänger mit einer Vielzahl von Lawinenphotodiodenelementen im Geiger-Modus, deren jeweilige Empfindlichkeit an eine Intensitätsverteilung von auf dem Lichtempfänger auftreffenden Empfangslicht angepasst wird. Die EP 3 557 286 B1 befasst sich mit einem optoelektronischen Sensor zur Abstandsbestimmung mit einem Lichtlaufzeitverfahren, der zwei Abtasteinheiten mit einer niedrigen beziehungsweise einer hohen Schwelle aufweist. Die hohe Schwelle dient als eine Art Filter, ob die Abtastungen mit der niedrigen Schwelle weiter ausgewertet werden. In der EP 3 770 633 B1 ist in einem optoelektronischen Sensor zur Abstandsmessung, der das Empfangssignal mit einer analogen Schwelle bewertet, eine Schwellanpassungen mittels Dioden vorgesehen, die den Rauschpegel näherungsweise als Quadratwurzel eines Gleichstromanteils des Empfangssignals bestimmen. Alles diese Vorgehensweisen basieren jedoch auf aufwändigen Beschaltungen, die zudem eigene Temperaturabhängigkeiten mitbringen, die wiederum aufwändig kompensiert werden müssen.

Die WO 2020/148567 A2 offenbart ein LIDAR, das als Lichtempfänger einen SiPM einsetzt. Mit einem zusätzlichen Sensor werden Objekte außerhalb des Sichtfeldes des Li-DARs erkannt, um gegebenenfalls die ausgesandte Energie zu begrenzen. Das ist ein sendeseitiges Eingreifen, das die genannten Nachteile der Dynamikkompression nicht überwindet.

Die WO 2021/036567 A1 offenbart ein LIDAR-System, in dem die Schwelle des SiPM-Empfängers angepasst wird. Dazu werden mit der aktuell gesetzten Schwelle empfangene Pulse gezählt, und die Schwellenanpassung erfolgt entsprechend einem Unterschied zu einer optimalen Anzahl empfangener Pulse.

Aus der WO2021/213013 A1 ist ein LIDAR-System mit anpassbarer Pulsbreite der Empfangspulse bekannt. Dafür wird die Schwelle eines Komparators für das Empfangssignal entsprechend einem Pegel des einfallenden Lichts verschoben.

In der US 10 830 881 B2 wird der Empfangspuls eines LIDAR-Systems in einem digitalisierten Empfangssignal erkannt. Ein Klassifikator bestimmt und berücksichtigt dafür einen dynamischen Rauschhintergrund.

Die US 2020/209356 A1 befasst sich mit einem LIDAR-System, das der Lichtlaufzeitbestimmung umschaltbar entweder die aus dem Empfangssignal gewonnenen Daten eines ADC oder eines TDC zuführt.

Es ist daher Aufgabe der Erfindung, eine Lichtlaufzeitmessung weiter zu verbessern. Diese Aufgabe wird durch einen entfernungsmessenden optoelektronischen Sensor und ein Verfahren zur Erfassung und Abstandsbestimmung eines Objekts in einem Überwachungsbereich nach Anspruch 1 beziehungsweise 11 gelöst. Der Sensor weist unter anderem einen Lichtsender, einen Lichtempfänger mit mindestens einem Lichtempfangselement sowie eine Steuer- und Auswertungseinheit auf, um ein Lichtsignal auszusenden, wieder zu empfangen und durch Auswertung des Empfangssignals die Lichtlaufzeit und damit den Abstand zu einem Objekt zu messen. Für die Lichtlaufzeitmessung wird das Empfangssignal mit einer Schwelle bewertet, um einen Empfangszeitpunkt zu bestimmen. Durch die Schwelle soll Nutzlicht vom Rauschen getrennt werden und insbesondere ein Empfangspuls erkannt werden.

Das ausgesandte Lichtsignal ist vorzugsweise ein Puls. Das mindestens eine Lichtempfangselement, vorzugsweise eine Vielzahl von Lichtempfangselementen oder Zellen, kann prinzipiell eine APD oder ein sonstiger Lichtdetektor sein. Bevorzugt handelt es sich um ein im Geigermodus betriebenes Lichtempfangselement, also einen SPAD-basierten Lichtempfänger. Insbesondere werden die Photoströme mehrerer solcher Lichtempfangselemente schon früh in der Verarbeitungskette miteinander kombiniert. Ein Beispiel ist eine Umsetzung als Siliziumphotomultiplier (SiPM), der ein quasi-analoges Bauteil darstellt. Die Schwelle ist vorzugsweise eine analoge Schwelle.

Die Erfindung geht von dem Grundgedanken aus, die Schwelle dynamisch anzupassen. Dynamisch bedeutet, dass die Anpassung auf sehr kurzen Zeitskalen erfolgt, nicht etwa nur einmalig oder gelegentlich wie im Falle einer Parametrierung oder dergleichen. Das Setzen eines derartigen statischen Anteils der Schwelle wird später als vorteilhafte, zusätzliche Weiterbildung beschrieben, ist aber keine dynamische Anpassung. Für die Anpassung wird eine Pegelinformation des Empfangssignals bestimmt. Eine Pegelinformation wird beispielsweise als skalare Intensität oder RSSI (Received Signal Strength Indication) angegeben, in einem weiteren Sinne auch als eine Pulsform oder eine Pulsbreite. Vorzugsweise wird in der Pegelinformation nur ein Fremdlichtanteil berücksichtigt und somit ein Rauschpegel ermittelt. Aber auch der Gesamtpegel, d.h. die Überlagerung von Fremdlicht und Nutzlicht, lässt bereits Rückschlüsse auf das Signal-Rauschverhalten zu, woraus eine Anpassung der Schwelle abgeleitet werden kann.

Die Erfindung hat den Vorteil, dass eine sehr schnelle Schwellennachführung ermöglicht ist, die gerade im Falle SPAD-basierter Lichtempfänger oder SiPMs deren Besonderheiten gerecht wird. Anpassungen sind im Mikrosekundenbereich und noch schneller denkbar. Dafür genügen kostengünstige, lineare und passive Bauteile, die nahezu keine Temperatureffekte haben. Im Gegensatz zu den einleitend genannten herkömmlichen Ansätzen mit komplexeren Schaltungen zur Schwellenanpassung ist daher keine zusätzliche aufwändige Temperaturkompensation der Schwelle erforderlich. Die Pegelinformation kann je nach Ausführungsform zusätzlich genutzt werden, sei es für sich als weitere Messgröße neben dem Abstand und/oder zur internen Verwendung, beispielsweise um Korrekturen oder Anpassungen der Laufzeitbestimmung vorzunehmen und so eine verbesserte Messgenauigkeit zu erreichen. Der Sensor behält dabei eine Mehrechofähigkeit, d.h. die separate Messbarkeit für hintereinander liegende Objekte im Falle von Teiltransparenz, etwa wenn ein Objekt hinter einer Glasscheibe angeordnet ist, oder bei Kantentreffern, wo jeweils ein Teil des Sendelichtquerschnitts auf hintereinander liegende Objekte fällt.

Die Steuer- und Auswertungseinheit weist bevorzugt einen Lichtlaufzeitpfad mit einer Digitalisierungseinheit auf, die das Empfangssignal auf Basis der Schwelle digitalisiert. In dieser Ausführungsform wird die Schwelle zum Digitalisieren des Empfangssignals verwendet. Sie differenziert dabei vorzugsweise zwischen Nutz- und Fremdlicht, so dass der Empfangszeitpunkt in dem digitalisierten Empfangssignal zeitlich lokalisiert werden kann. Dabei gibt es vorzugsweise nur eine einzige Schwelle, mit der das Empfangssignal dann binarisiert wird, oder es werden mehrere Schwellen für zusätzliche digitale Zustände verwendet, bis hin zu einer vollständigen Mehrbitwandlung. Der Lichtlaufzeitpfad weist vorzugsweise ein erstes Hochpassfilter auf. Damit bleibt ein hochfrequenter Anteil des Empfangssignals erhalten, der für die Bestimmung des Empfangszeitpunkts geeignet ist.

Die Steuer- und Auswertungseinheit ist bevorzugt dafür ausgebildet, für die Bestimmung der Lichtlaufzeit in dem Empfangssignal die zeitliche Lage einer Flanke oder eines Maximums zu ermitteln, insbesondere einen Schwerpunkt des Maximums. Die Flanke, insbesondere die erste steigende Flanke zu Beginn eines Empfangspulses, lässt sich sehr präzise in der Zeit lokalisieren, wenn der Empfangspuls sich hinreichend aus dem Rauschen erhebt. Alternativ wird das Maximum lokalisiert, wobei hier Maximum den Signalverlauf um einen Maximalwert herum bezeichnet ("Peak"). Ein einzelner Maximalwert ist nur eine Möglichkeit, das Maximum zu charakterisieren, und es ist in der Regel nicht die aussagekräftigste und robusteste. Deutlich rauschtoleranter ist die Bestimmung eines Schwerpunkts, beispielsweise desjenigen Teiles des Maximums oder Empfangspulses, der sich über eine Schwelle erhebt. Es gibt weitere Möglichkeiten, das Maximum zu lokalisieren, beispielsweise mittels Parabelfit oder als Mittenlage oder sonstige feste Lage zwischen dem Über- und anschließenden Unterschreiten einer Schwelle.

Die Digitalisierungseinheit ist bevorzugt als Komparator mit einem ersten Eingang und einem zweiten Eingang ausgebildet, wobei das Empfangssignal an dem ersten Eingang und die Schwelle an dem zweiten Eingang angelegt ist. Der Komparator ist ein besonders einfaches Bauteil, um das Empfangssignal mit der Schwelle zu vergleichen. Das ist besonders vorteilhaft im Zusammenhang mit einem Pulsmittelungsverfahren. Insbesondere wird das Empfangssignal binarisiert, und es wird mit einer Vielzahl von Messwiederholungen der jeweiligen binarisierten Empfangssignale ein Histogramm aufgebaut und anschließend ausgewertet, so wie dies in der einleitend genannten EP 1 972 961 A2 beschrieben ist.

Die Steuer- und Auswertungseinheit ist bevorzugt dafür ausgebildet, an dem zweiten Eingang eine Basisschwelle anzulegen und die Basisschwelle aus der Pegelinformation auf die dynamisch angepasste Schwelle zu verschieben. Die Basisschwelle stellt eine Grundempfindlichkeit beispielsweise entsprechend einer Auslegung des Sensors, aus einer Kalibrationsmessung oder durch eine Parametrierung oder Moduswahl ein. Das ist ein statischer Anteil der Schwelle. Eine Basisschwelle kann auch für Ausführungsformen ohne Komparator eingesetzt sein. Die dynamische Schwellenanpassung bezieht sich dann jeweils nicht auf ein Nullniveau, sondern auf die Basisschwelle.

Die Steuer- und Auswertungseinheit ist dafür ausgebildet, die Pegelinformation zu reskalieren und die Schwelle um die reskalierte Pegelinformation zu verändern. Der Effekt der gemessenen Pegelinformation auf die Schwelle ist dadurch einstellbar oder dosierbar. Reskalierung bedeutet eine lineare Anpassung. Dafür genügt ein Potentiometer. Ziel der Reskalierung ist ein gewünschter Abstand der Schwelle zum Rauschen in Abhängigkeit vom derzeitigen Signal-Rausch-Verhältnis, beispielsweise gemessen in Vielfachen der Standardabweichung. Die Reskalierung kann auch ausgenutzt werden, um Toleranzen auszugleichen.

Die Steuer- und Auswertungseinheit ist bevorzugt dafür ausgebildet, die dynamische Anpassung der Schwelle anzuschalten oder abzuschalten. Der Sensor kann folglich wahlweise mit dynamischer Schwellenanpassung oder ohne dynamische Schwellenanpassung betrieben werden. Eine Schwellenanpassung bedeutet unterschiedliche Empfindlichkeit. Insbesondere können bei einer recht hohen Schwelle dunklere Objekte im Rauschen verschwinden, sie werden dann gar nicht mehr erfasst. Es hängt von der konkreten Anwendung des Sensors ab, ob ausschließlich stabile Messungen gewünscht sind oder ob eher gewünscht ist, sämtliche Messinformationen zu gewinnen, die möglich sind.

Die Steuer- und Auswertungseinheit weist ein Tiefpassfilter auf, dem das Empfangssignal vor Ermittlung der Pegelinformation zugeführt wird. Dabei wird das Messsignal auch noch einem anderen Pfad ohne das Tiefpassfilter zugeführt, insbesondere dem oben genannten Lichtlaufzeitpfad, denn die Lichtlaufzeitmessung ist auf die schnellen Änderungen beziehungsweise Empfangspulse angewiesen, die durch das Tiefpassfilter ausgefiltert würden. Für die Pegelinformation genügt eine langsamere, summarische Information, die das Tiefpassfilter erzeugt.

Die Steuer- und Auswertungseinheit ist bevorzugt dafür ausgebildet, für die Bestimmung der Pegelinformation einen in dem Lichtempfänger fließenden Strom zu messen. Der Indikator für die Pegelinformation ist damit der Detektorstrom. Die Messung des Detektorstroms ist einfach und liefert die erforderliche Information.

Die Steuer- und Auswertungseinheit ist bevorzugt für eine Strombegrenzung ausgebildet, die anhand des gemessenen Stroms eine Vorspannung des Lichtempfängers absenkt, damit der in dem Lichtempfänger fließende Strom einen für das Bauteil schädlichen Grenzstrom nicht überschreitet. Die Strombegrenzung begrenzt bei starkem Lichteinfall den Strom durch den Lichtempfänger künstlich, um das Bauteil vor Überlastung oder Überhitzung zu schützen. Erforderlichenfalls wird eine Vorspannung reduziert, um den Verstärkungsfaktor abzusenken beziehungsweise unterhalb der Durchbruchspannung die betroffenen Lichtempfangselemente oder den Lichtempfänger als Ganzes praktisch inaktiv zu schalten. Besonders bevorzugt hat die Messung des Detektorstroms eine Doppelfunktion sowohl für die Strombegrenzung als auch für die Bestimmung der Pegelinformation zur Schwellenanpassung.

Die Steuer- und Auswertungseinheit weist bevorzugt einen AD-Wandler auf, um das durch den in dem Lichtempfänger fließenden Strom repräsentierte Empfangssignal zu digitalisieren, wobei die Auflösung des AD-Wandlers nicht ausreicht, um einen Empfangszeitpunkt des remittierten Lichtsignals zu bestimmen. Der AD-Wandler ist somit kein hochwertiges, teures Bauteil und könnte die schnellen Empfangssignale oder Empfangspulse für die Lichtlaufzeitmessung nicht erfassen oder jedenfalls nicht hinreichend zeitlich auflösen. Für ein Fremdlichtsignal oder eine Ermittlung der Pegelinformation, vorzugsweise die AD-Wandlung zuvor tiefpassgefilterter Signale, ist diese Auflösung ausreichend, so das mit einer günstigeren Komponente gearbeitet werden kann.

Die Steuer- und Auswertungseinheit ist dafür ausgebildet, die Pegelinformation aus einem Fremdlichtsignal in einer Sendepause bei inaktivem Lichtsender zu erfassen. Dann gibt es keine Überlagerung mit Nutzlicht, das Empfangssignal enthält keinen Nutzlichtanteil beziehungsweise keine Empfangspulse, so dass das Empfangssignal ein reines Rauschsignal ist, das wiederum vom Fremdlicht dominiert wird. Durch die gesonderte Messung des Fremdlichtsignals werden die Nachteile der Dynamikkompression insbesondere SPAD-basierter Lichtempfänger mit limitierter Bandbreite wegen der Anzahl an verfügbaren SPAD-Zellen überwunden, und dies auch bei Sättigungs- oder Nachpulseffekten. Vorzugsweise wird dann in einer zu der Sendepause zeitversetzten Messphase mit aktivem Lichtsender die Lichtlaufzeit bestimmt. In der Messphase sind Fremdlicht und Nutzlicht überlagert. Der entsprechende Pegel liefert immer noch eine zumindest indizielle Information über den Fremdlichtanteil und könnte zumindest ergänzend für eine Schwellenanpassung genutzt werden. Bevorzugt wird aber in der Messphase die Lichtlaufzeit mit einer Schwelle bestimmt, die aus der Pegelinformation der Sendepause angepasst ist.

Die Steuer- und Auswertungseinheit ist bevorzugt dafür ausgebildet, die Pegelinformation in einem zusätzlichen Auswertungskanal zu bestimmen, der insbesondere ein zweites Hochpassfilter aufweist. Das ist eine Alternative zu einer zeitversetzten Messung wie im Vorabsatz, um so ebenfalls mit der Dynamikkompression insbesondere SPAD-basierter Lichtempfänger umgehen zu können. Die Bestimmung der Lichtlaufzeit und der Pegelinformation erfolgt hier in einem jeweils eigenen Auswertungskanal, insbesondere dem oben genannten Lichtlaufzeitpfad. Um die beiden Pfade begrifflich zu unterscheiden, werden der Lichtlaufzeitpfad in einer derartigen mehrkanaligen Ausführungsform als erster Auswertungskanal und der zusätzliche Auswertungskanal für die Pegelinformation als zweiter Auswertungskanal bezeichnet. Eine mehrkanaligen Auswertungsstruktur ermöglicht eine für das jeweilige Auswertungsziel eines Auswertungskanals optimierte Vorverarbeitung. In dem ersten Auswertungskanal ist das Auswertungsziel eine hochgenaue Bestimmung des Empfangszeitpunkts, denn daraus ergibt sich zusammen mit einer Information über den Sendezeitpunkt die Lichtlaufzeit. Der zweite Auswertungskanal bestimmt die Pegelinformation. Dazu bereitet der zweite Auswertungskanal das Empfangssignal vorzugsweise mit einem eigenen zweiten Hochpassfilter auf, dessen Grenzfrequenz für die Funktion der Pegelmessung optimiert ist. In weiteren Ausführungsformen sind mehr als zwei Auswertungskanäle vorgesehen. Beispielsweise kann die oben beschriebene Messung des Detektorstroms in einer Strombegrenzungsschaltung als ein dritter Auswertungskanal verstanden werden.

Der erste Auswertungskanal weist bevorzugt das erstes Hochpassfilter auf. Das erste Hochpassfilter soll mit einer ersten Grenzfrequenz dafür sorgen, dass ein für die Lichtlaufzeitmessung in der Zeit zu lokalisierender Puls erhalten bleibt oder sogar noch besser herausgearbeitet wird. Die erste Grenzfrequenz wird daher unter Berücksichtigung der kurzen Pulse gewählt. Effektiv leistet das erste Hochpassfilter eine Differenzierung, um mit Einsetzen der Lawine bei Lichtempfang eine scharfe Flanke zu erhalten. Die langsameren Signalanteile sind für eine präzise Zeitmessung zunächst nicht von Interesse. Der erste Auswertungskanal weist bevorzugt die Digitalisierungseinheit beziehungsweise den Komparator zur Digitalisierung des Empfangssignals auf. An diesem Komparator liegt vorzugsweise die Schwelle an, die dynamisch angepasst wird.

Der erste Auswertungskanal weist bevorzugt ein erstes Bandpassfilter auf. Es ist vorzugsweise zwischen erstem Hochpassfilter und Komparator angeordnet. Damit wird ein Empfangspuls weiter geformt, es wird eine Schwingung angestoßen. Die Grenzfrequenzen des ersten Bandpassfilters werden so optimiert, dass eine hohe Messgenauigkeit mit einer Mehrechofähigkeit vereinbart wird. Dazu sollte eine von dem Bandpassfilter angestoßene Schwingung schnell abklingen, damit ein nächstes Ziel unterscheidbar bleibt, ohne dass Empfangspulse ineinanderlaufen, während zugleich der Ruhepegel möglichst wenig verschoben wird. Dieses Optimierungsziel lässt sich durch höhere Ordnungen des ersten Bandpassfilters noch besser erreichen.

Das zweite Hochpassfilter des zweiten Auswertungskanals weist bevorzugt eine zweite Grenzfrequenz auf, wobei insbesondere die zweite Grenzfrequenz kleiner ist als die erste Grenzfrequenz. Auch zum Gewinnen der Pegelinformation sind die hochfrequenten Anteile von Interesse, denn es soll der Signalverlauf im Bereich des Empfangspulses untersucht werden. Allerdings ist vorzugsweise die zweite Grenzfrequenz kleiner als die erste Grenzfrequenz, so dass im Ergebnis im zweiten Auswertungskanal breitere Empfangspulse ausgewertet werden als im ersten Auswertungskanal. Das ermöglicht eine verbesserte Bestimmung der Pegelinformation. Durch den verbreiterten Empfangspuls wäre zugleich die Lokalisierung des Empfangspulses in der Zeit erschwert, beispielsweise wäre ein Schwerpunkt zusätzlich verfälscht, und die Mehrechofähigkeit wäre eingeschränkt, weil breitere Pulse leichter ineinanderlaufen. Die zeitliche Lokalisierung ist aber nicht Aufgabe des zweiten Auswertungskanal, sondern des ersten Auswertungskanal, und darin zeigt sich erneut der Vorteil zweier Auswertungskanäle, die jeweils für ihr eigenes Auswertungsziel optimiert sind, hier zunächst hinsichtlich der ersten und zweiten Grenzfrequenz.

Der zweite Auswertungskanal weist bevorzugt ein zweites Bandpassfilter auf. Es hat ähnliche Aufgaben zur Pulsformung wie das erste Bandpassfilter im ersten Auswertungskanal. Allerdings sind die Grenzfrequenzen wiederum unabhängig wählbar und optimierbar. Im zweiten Auswertungskanal kann eine gewisse zeitliche Verzerrung oder Verschiebung hingenommen werden. Es geht hier eher darum, die Pegelinformation möglichst repräsentativ zu erfassen.

Der zweite Auswertungskanal weist bevorzugt einen zweiten Komparator zur Digitalisierung des Empfangssignals auf, insbesondere mit einer anpassbaren zweiten Schwelle. Mit dem zweiten Komparator wird das in dem zweiten Auswertungskanal vorverarbeitete Empfangssignal für die weitere Verarbeitung digitalisiert. In einer bevorzugten Ausführungsform wird durch Binarisierung und Messwiederholungen analog dem Vorgehen mit dem Komparator in dem ersten Auswertungskanal ein zweites Histogramm aufgezeichnet. Wie schon im ersten Auswertungskanal kann anstelle einer Binarisierung eine mehrwertige Digitalisierung vorgesehen sein. Die zweite Schwelle kann unabhängig eingestellt werden, um eine möglichst aussagekräftige Pegelinformation zu gewinnen. Auch eine dynamische Schwellenanpassung der zweiten Schwelle ist vorstellbar.

Die Steuer- und Auswertungseinheit weist bevorzugt eine umschaltbare Auswertungsanordnung für die Bestimmung der Lichtlaufzeit und der Pegelinformation auf, die mittels eines Umschalters mit verschiedenen Lichtempfangselementen oder Gruppen von Lichtempfangselementen verbunden werden kann. Der Sensor misst in dieser Ausführungsform in einer Vielzahl von Empfangskanälen durch mehrere Gruppen von Lichtempfangselementen, SPAD-Zellen oder SiPMs. Der Sensor hat folglich eine mehrkanalige Empfangsstruktur. Für die Empfangskanäle ist jedoch nur eine gemeinsame Auswertungsanordnung vorgesehen, oder jedenfalls sind weniger Auswertungsanordnungen vorgesehen als Empfangskanäle, zwischen denen beispielsweise per Multiplexing umgeschaltet wird. Die Auswertungsanordnung kann in sich mehrere Auswertungskanäle für die Bestimmung von Lichtlaufzeit und Pegelinformation aufweisen wie beschrieben, eine mehrkanalige Empfangsstruktur und eine mehrkanalige Auswertungsstruktur sind zwei verschiedene Aspekte, die zahlreiche Mischformen ermöglichen.

Die Steuer- und Auswertungseinheit ist bevorzugt dafür ausgebildet, anhand der Pegelinformation festzustellen, ob das Objekt ein Reflektor ist. Die Pegelinformation erlaubt eine Aussage über die Stärke des Nutzlichtsignals oder Empfangspulses. Bei einem natürlichen Ziel oder Objekt ist der Nutzlichtbeitrag gering. Ein hoher Pegel kann daher als Erkennungszeichen für einen Reflektor genutzt werden. Der Sensor erhält auf diese Weise eine Reflektorerkennung. Die Reflektorerkennung kann eine zusätzliche Ausgabegröße erzeugen. In einigen Anwendungen, beispielsweise in der Navigation, werden damit Reflektoren als besondere, künstliche Ziele oder Landmarken identifiziert. Die Reflektorinformation kann auch intern verwendet werden, beispielsweise damit die Lichtlaufzeitbestimmung angepasst werden, je nachdem, ob ein Reflektor oder ein anderes Objekt angetastet ist.

Die Steuer- und Auswertungseinheit ist bevorzugt dafür ausgebildet, die Pegelinformation mit einer Reflektorschwelle zu vergleichen. Das ist ein einfaches und sehr klares Kriterium, um die Anwesenheit eines Reflektors zu erkennen. Eine überschwellige Pegelinformation wird als erkannter Reflektor aufgefasst, eine unterschwellige Pegelinformation als natürliches Ziel, sofern überhaupt ein Entfernungswert bestimmt werden konnte. Besonders bevorzugt wird die Reflektorschwelle an einen gemessenen Abstand angepasst. Mit zunehmendem Abstand ist weniger Nutzlicht beziehungsweise sind schwächere Empfangspulse zu erwarten. Dem kann durch eine mit dem jeweils gemessenen Abstand fallende Reflektorschwelle Rechnung getragen werden.

Die Steuer- und Auswertungseinheit ist bevorzugt dafür ausgebildet, aus der Pegelinformation das Remissionsvermögen des Objekts zu bestimmen, insbesondere mit einer Korrektur anhand des gemessenen Abstands. In dieser Ausführungsform wird feiner zwischen helleren und dunkleren Zielen abgestuft und nicht nur binär zwischen Anwesenheit und Abwesenheit eines Reflektors unterschieden. Dabei kann die Information über einen Reflektor zusätzlich erfasst beziehungsweise aus dem Remissionsvermögen gewonnen werden. Das Remissionsvermögen wird vorzugsweise anhand des jeweiligen gemessenen Abstands korrigiert, aus den gleichen Gründen wie eine mögliche abstandsabhängige Anpassung der Reflektorschwelle, denn aus größerer Entfernung kommt bei gleichem Remissionsvermögen weniger Nutzlicht zurück.

Die Steuer- und Auswertungseinheit ist bevorzugt dafür ausgebildet, die Pegelinformation oder eine aus der Pegelinformation abgeleitete Information auszugeben, insbesondere ob das Objekt ein Reflektor ist, oder ein Remissionsvermögen des Objekts. Die Pegelinformation ist schon für sich eine interessante Messgröße sein, die zusätzlich zum gemessenen Abstand ausgegeben werden kann. Es ist denkbar, sie vorher aufzubereiten, beispielsweise Einheiten umzurechnen, oder eine aus der Pegelinformation abgeleitete Information auszugeben. Zwei besonders vorteilhafte Aufbereitungen wurden schon genannt, nämlich eine Reflektorinformation und das Remissionsvermögen des angetasteten Objekts. Eine Reflektorinformation kann mit nur einem Bit als Flag für einen erkannten Reflektor ausgegeben werden.

Die Steuer- und Auswertungseinheit ist bevorzugt dafür ausgebildet, die Bestimmung der Lichtlaufzeit auf Basis der Pegelinformation oder einer daraus abgeleiteten Information anzupassen, insbesondere auf Basis der Information, dass das Objekt ein Reflektor ist, oder eines Remissionsvermögens des Objekts. Objekte unterschiedlichen Remissionsvermögens werden scheinbar in unterschiedlichen Entfernungen gemessen. Diese Farb- oder Schwarzweißverschiebung kann durch eine entsprechende Korrektur kompensiert werden. Das ist erfindungsgemäß trotz einer Dynamikkompression möglich, weil die entsprechende Pegelinformation bestimmbar wird. Die erforderlichen Korrekturwerte werden beispielsweise mit einem Graukeilabgleich eingelernt. Es ist möglich, das Verfahren der Bestimmung des Empfangszeitpunkts bei der Lichtlaufzeitbestimmung in Abhängigkeit von der Pegelinformation anzupassen, beispielsweise bei einer hohen Pegelinformation ein anderes Verfahren zu verwenden als bei einer geringen Pegelinformation. In einer besonders bevorzugten Ausführungsform wird je nach Pegelinformation zwischen einer Flanken- und Schwerpunktsauswertung umgeschaltet beziehungsweise anhand der Pegelinformation entschieden, ob die Lichtlaufzeit aus der Flanke oder dem Maximum bestimmt wird. Ob das Signal-Rausch-Verhältnis gut genug für eine Flankenauswertung ist, wird beispielsweise anhand einer Schwelle an eine Pulsbreite oder eine Pegelinformation entschieden. So wird jeweils ein optimaler Algorithmus zur Lichtlaufzeitbestimmung verwendet. Es ist jeweils möglich, die Information, dass es sich bei dem Ziel um einen Reflektor handelt, gesondert zu behandeln, oder es wird einfach ohne qualitativen Unterschied wie ein hohes Remissionsvermögen betrachtet.

Der Sensor ist bevorzugt als Laserscanner ausgebildet, insbesondere als Mehrlagenscanner, und weist eine bewegliche Ablenkeinheit auf, mit deren Hilfe die Lichtsignale periodisch durch den Überwachungsbereich geführt werden. Die Ablenkeinheit ist in beliebiger Weise beispielsweise als Drehspiegel, jedoch vorzugsweise in Form einer drehbaren Abtasteinheit ausgebildet, die praktisch einen beweglichen Messkopf bildet, in dem der Lichtsender und/oder der Lichtempfänger und bevorzugt auch zumindest Teile der Steuer- und Auswertungseinheit untergebracht sind. Ein Mehrebenen- oder Mehrlagenscanner tastet mit der Bewegung der beweglichen Ablenkeinheit den Überwachungsbereich in mehreren Ebenen ab.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung eines optoelektronischen Sensors zur Lichtlaufzeitmessung;
- Fig. 2: eine Schnittdarstellung eines als Laserscanner ausgebildeten optoelektronischen Sensors;
- Fig. 3: ein beispielhaftes Blockschaltbild für die Auswertung von einfallendem Licht, um eine Lichtlaufzeit und eine Fremdlicht- beziehungsweise Pegelinformation zu erfassen und damit eine Schwelle für eine Bestimmung eines Empfangszeitpunkts dynamisch anzupassen;
- Fig. 4: ein schematischer zeitabhängiger Verlauf eines idealisierten Empfangssignals bei Einfall eines Lichtpulses;
- Fig. 5: ein schematischer zeitabhängiger Verlauf eines rauschbehafteten, vorverarbeiteten Empfangssignals;
- Fig. 6: ein schematischer Spannungsverlauf in Abhängigkeit von einem Detektorstrom für eine Strombegrenzung;
- Fig. 7: ein schematischer Verlauf zweier rauschbehafteter, vorverarbeiteter Empfangssignale mit höherem und geringerem Rauschanteil mit eine pegelabhängig angepassten Schwelle;
- Fig. 8: eine schematische Darstellung des zeitlichen Ablaufs einer Lichtlaufzeitmessung mit Fremdlichtbestimmung;
- Fig. 9: ein schematischer zeitlicher Verlauf eines durch den Lichtempfänger fließenden Stroms bei Erfassung eines natürlichen Objekts nach Tiefpassfilterung;
- Fig. 10: ein schematischer zeitlicher Verlauf eines durch den Lichtempfänger fließenden Stroms bei Erfassung eines Reflektors nach Tiefpassfilterung;
- Fig. 11: eine vereinfachte Übersichtsdarstellung einer mehrkanaligen Auswertungsstruktur für einen optoelektronischen Sensor zur Lichtlaufzeitmessung;
- Fig. 12: eine detailliertere Darstellung eines ersten Auswertungskanals zur Lichtlaufzeitmessung;
- Fig. 13: eine detailliertere Darstellung eines zweiten Auswertungskanals zu Bestimmung einer Pegelinformation; und
- Fig. 14: eine detailliertere Darstellung eines dritten Auswertungskanals zur Fremdlichtbestimmung.

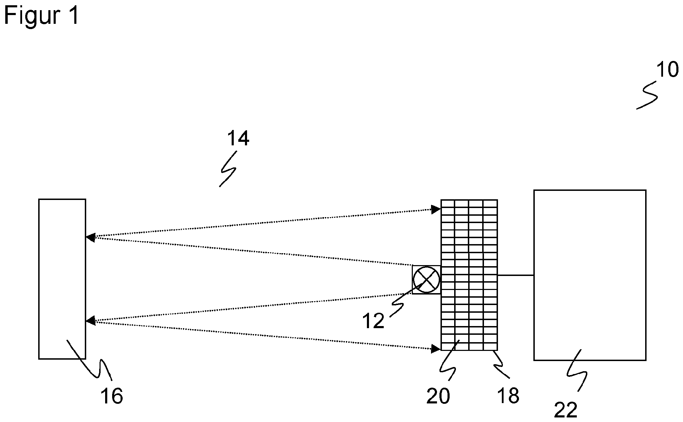

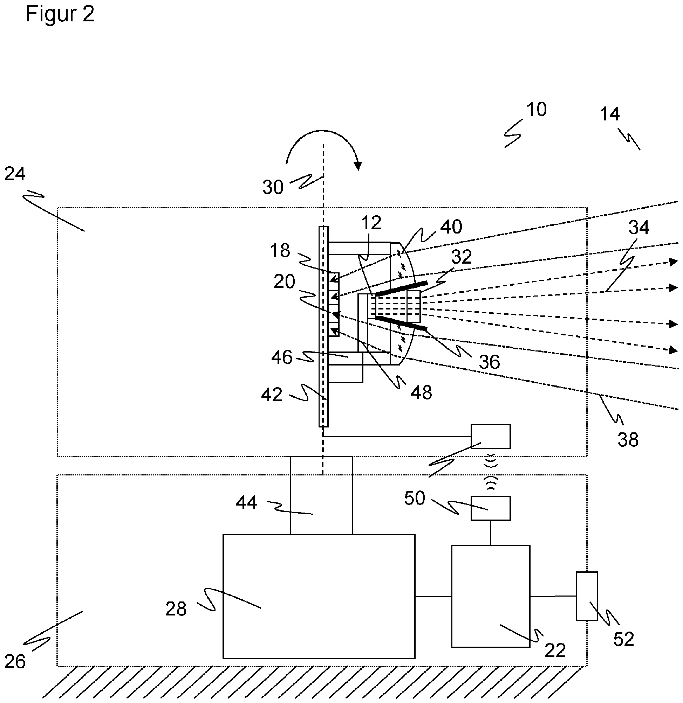

Figur 1 zeigt eine sehr vereinfachte schematische Blockdarstellung eines optoelektronischen Sensors 10 in einer Ausführungsform als einstrahliger Lichttaster. Die Ausführungsform als Lichttaster ist rein beispielhaft. Eine weitere Ausführungsform als Laserscanner wird später noch unter Bezugnahme auf die Figur 2 erläutert. Als weitere Alternative können mehrere Sensoren 10 miteinander verbunden werden, um ein tastendes Lichtgitter mit mehreren, meist parallelen Strahlen zu bilden, welches in jedem Strahl Entfernungen misst oder überwacht. Diese Aufzählung optoelektronischer Sensoren, in denen die Erfindung eingesetzt werden kann, ist nicht abschließend. Auch mobile Systeme sind denkbar, bei denen der Sensor 10 beweglich montiert ist.

Ein Lichtsender 12, beispielsweise eine LED oder eine Laserlichtquelle, sendet ein Lichtsignal, vorzugsweise einen Lichtpuls, in einen Überwachungsbereich 14 aus. Trifft es dort auf ein Objekt 16, so wird ein Teil des Lichtsignals remittiert oder reflektiert und kehrt zu einem Lichtempfänger 18 zurück. Dieser Lichtempfänger 18 weist in dieser Ausführungsform eine Vielzahl von Lichtempfangselementen auf, die als Lawinenphotodiodenelemente 20 im Geigermodus oder SPADs ausgebildet sind. Bevorzugt handelt es sich um einen SiPM (Silicon Photomultiplier). Die Lawinenphotodiodenelemente 20 sind beispielsweise zu einer Matrix, einer Linie oder auch in einem anderen Muster oder irregulär angeordnet. In anderen Ausführungsformen weist der Lichtempfänger 18 keine SPADs auf, sondern andere Lichtempfangselemente, oder es handelt sich um einen Einzelempfänger mit nur einem Lichtempfangselement.

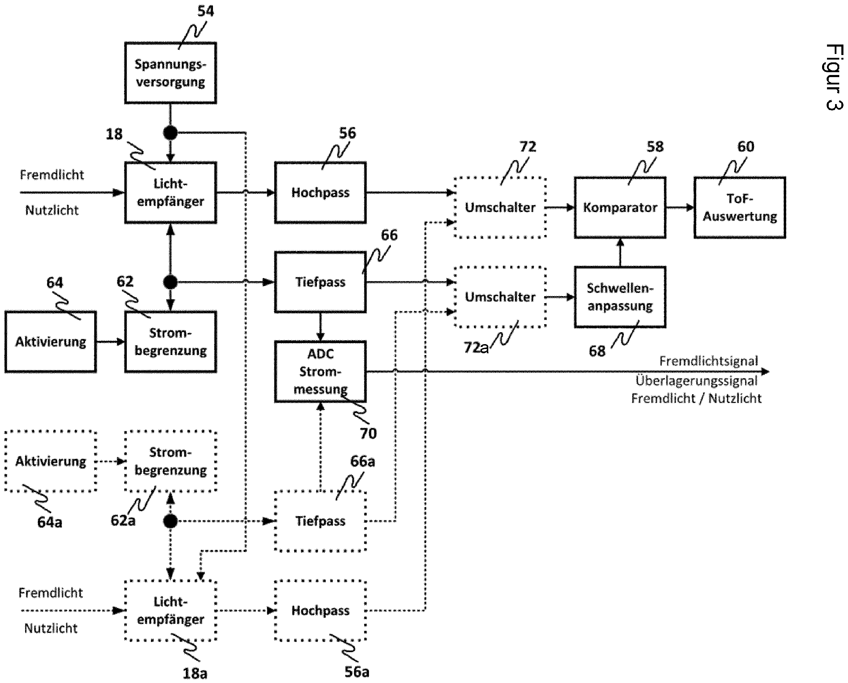

Die Empfangssignale der Lawinenphotodiodenelemente 20 werden von einer Steuer- und Auswertungseinheit 22 ausgelesen und dort ausgewertet. Dazu können die Empfangssignale zu einem Summensignal zusammengefasst werden. Um den Abstand des Objekts 16 zu messen, bestimmt die Steuer- und Auswertungseinheit 22 eine Lichtlaufzeit von Aussenden eines Lichtsignals bis zu dessen Empfang und rechnet dies über die Lichtgeschwindigkeit in einen Abstand um. Als zusätzliche Messgrößen und/oder interne Hilfsgrößen werden ein Signalverlauf beziehungsweise eine Pegelinformation und/oder ein Fremdlichtanteil bestimmt. Die Auswertung wird später unter Bezugnahme auf die Figuren 3 bis 14 weiter erläutert. Umgekehrt kann die Steuer- und Auswertungseinheit 22 auf Lichtsender 12 und/oder Lichtempfänger 18 einwirken, etwa um das Lichtsignal zu formen und auszulösen oder dessen Eigenschaften festzulegen, oder um Eigenschaften des Lichtempfängers 18 einzustellen.

Die Auftrennung in Lichtempfänger 18 und Steuer- und Auswertungseinheit 22 in Figur 1 ist so auch in der Praxis denkbar, dient aber in erster Linie der Erläuterung. Alternativ werden diese Elemente zumindest teilweise auf einem gemeinsamen Chip integriert, dessen Fläche sich lichtempfindliche Bereiche der Lawinenphotodiodenelemente 20 und einzelnen oder Gruppen von Lawinenphotodiodenelementen 20 zugeordnete Schaltkreise zu deren Auswertung und Ansteuerung teilen. Auch die optische Anordnung mit einem Lichtsender 12, der einen kleinen Anteil des Lichtempfängers 18 verdeckt, ist rein beispielhaft. Alternativ sind andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Figur 2 zeigt eine schematische Schnittdarstellung durch einen optoelektronischen Sensor 10 in einer Ausführungsform als Laserscanner. Dabei sind gleiche oder einander entsprechende Merkmale mit den schon zu Figur 1 eingeführten Bezugszeichen versehen, und nur abweichende Eigenschaften werden noch beschrieben. Der Sensor 10 umfasst in grober Aufteilung eine bewegliche Abtasteinheit 24 und eine Sockeleinheit 26. Die Abtasteinheit 24 ist der optische Messkopf, während in der Sockeleinheit 26 weitere Elemente wie eine Versorgung, Auswertungselektronik, Anschlüsse und dergleichen untergebracht sind. Im Betrieb wird mit Hilfe eines Antriebs 28 der Sockeleinheit 26 die Abtasteinheit 24 in eine Drehbewegung um eine Drehachse 30 versetzt, um so den Überwachungsbereich 14 periodisch abzutasten.

In der Abtasteinheit 24 sind Lichtsender 12 und Lichtempfänger 18 untergebracht. Der Lichtsender 12 weist hier beispielsweise eine LED oder einen Laser in Form eines Kantenemitters oder VCSELs auf und sendet mit Hilfe einer dargestellten Sendeoptik 32 mehrere Sendelichtstrahlen 34 mit gegenseitigem Winkelversatz in den Überwachungsbereich 14 aus. Die Erzeugung der mehreren Sendelichtstrahlen 34 ist beispielsweise über eine Vielzahl von Lichtquellen und/oder durch optische Elemente wie Strahlteiler, Lichtleiter oder diffraktive Elemente möglich. Zur Vermeidung von Streulicht innerhalb des Sensors 10 kann der interne Lichtweg der Sendelichtstrahlen 34 von einem lichtundurchlässigen Tubus 36 abgeschirmt werden.

Treffen die Sendelichtstrahlen 34 in dem Überwachungsbereich 14 auf ein Objekt, so kehren entsprechende remittierte Lichtstrahlen 38 zu dem Sensor 10 zurück. Die remittierten Lichtstrahlen 38 werden von einer Empfangsoptik 40 auf den Lichtempfänger 18 geführt. Der Lichtempfänger 18 weist mehrere Gruppen von SPADs (Single-Photon Avalanche Diode) beziehungsweise mehrere SiPMs (Silicon Photomultiplier) auf, um die mehreren remittierten Lichtstrahlen 38 zu erfassen. Dabei ist vorzugsweise der Empfangspfad mit der Gestaltung der Empfangsoptik 40 sowie der Anordnung und Ausrichtung von Lichtempfänger 18 und Empfangsoptik 40 so ausgelegt, dass jeweils ein remittierter Lichtstrahl 38 auf eine bestimmte Gruppe von SPADs beziehungsweise ein SiPM fällt. Wechselwirkungen sind aber in der Regel insbesondere nicht für alle Abstände von Objekten zu vermeiden. Das kann ein Grund dafür sein, die remittierten Lichtstrahlen 38 vorzugsweise getrennt in einem Multiplexbetrieb zu empfangen.

Der Lichtempfänger 18 ist in dieser Ausführungsform auf einer Leiterkarte 42 angeordnet, die auf der Drehachse 30 liegt und mit der Welle 44 des Antriebs 28 verbunden ist. Die Empfangsoptik 40 stützt sich durch Beinchen 46 auf der Leiterkarte 42 ab und hält eine weitere Leiterkarte 48 des Lichtsenders 12. Die beiden Leiterkarten 42, 48 sind untereinander verbunden und können auch als gemeinsame Flexprint-Leiterkarte ausgebildet sein.

Der in Figur 2 gezeigte optische Aufbau mit zwei übereinander geschichteten Leiterkarten 42, 48 oder Leiterkartenbereichen und einer zentral innerhalb der Empfangsoptik 40 angeordneten gemeinsamen Sendeoptik 32 ist rein beispielhaft zu verstehen. So wäre alternativ jede andere an sich beispielsweise von eindimensionalen optoelektronischen Sensoren oder Laserscannern bekannte Anordnung wie etwa eine biaxiale Anordnung beziehungsweise Doppelaugenanordnung oder die Verwendung eines Umlenk- oder Strahlteilerspiegels möglich. Weiterhin ist denkbar, Lichtsender 12 und Lichtempfänger 18 auf einer gemeinsamen Leiterkarte zu montieren, bei gegenüber Figur 2 veränderter Anordnung auch auf einer gemeinsamen Leiterkarte, die in nur einer Ebene liegt.

Eine berührungslose Versorgungs- und Datenschnittstelle 50 verbindet die bewegliche Abtasteinheit 24 mit der ruhenden Sockeleinheit 26. Dort befindet sich die Steuer- und Auswertungseinheit 22, die zumindest teilweise auch auf der Leiterkarte 42 oder an anderem Ort in der Abtasteinheit 24 untergebracht sein kann. Zusätzlich zu Steuer- und Auswertungsfunktionen analog zu denjenigen, die zu der Ausführungsform gemäß Figur 1 schon beschrieben wurden, wird davon der Antrieb 28 gesteuert und das Signal einer nicht gezeigten, von Laserscannern allgemein bekannten Winkelmesseinheit erfasst, die die jeweilige Winkelstellung der Abtasteinheit 24 bestimmt.

Aus den mittels Lichtlaufzeitverfahren bestimmten Abständen zu einem jeweiligen angetasteten Objekt und der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 38 und dessen Erfassungsort auf dem Lichtempfänger 18 ebenfalls bekannt, so dass insgesamt ein dreidimensionaler Raumbereich abgetastet wird. Damit sind die Objektpositionen beziehungsweise Objektkonturen bekannt und können über eine Sensorschnittstelle 52 ausgegeben werden. Die Sensorschnittstelle 52 oder ein weiterer, nicht gezeigter Anschluss dienen umgekehrt als Parametrierschnittstelle.

Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 52 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 24. Alternativ ist auch eine periodische Ablenkung mittels Drehspiegel denkbar. Bei mehreren Sendelichtstrahlen 34 hat das aber den Nachteil, dass es von der jeweiligen Drehstellung abhängt, wie die mehreren Sendelichtstrahlen 34 in den Überwachungsbereich 14 fallen, denn deren Anordnung rotiert durch den Drehspiegel, wie bekannte geometrische Überlegungen ergeben. Eine weitere alternative Ausführungsform schwenkt die Abtasteinheit 24 hin und her, entweder anstelle der Drehbewegung oder zusätzlich um eine zweite Achse senkrecht zur Drehbewegung, um auch in Elevation eine Abtastbewegung zu erzeugen. Auch eine Ausgestaltung als Solid-State-Lidar ist möglich.

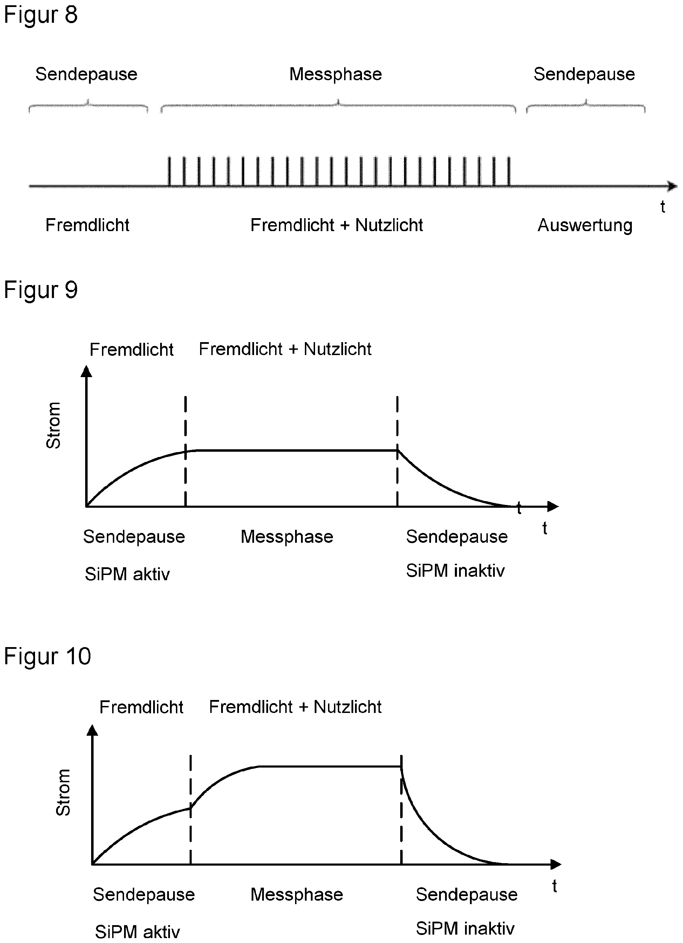

Figur 3 zeigt ein beispielhaftes Blockschaltbild für die Auswertung von einfallendem Licht, um eine Lichtlaufzeit und eine Fremdlicht- beziehungsweise Pegelinformation zu erfassen sowie eine Schwelle zur Bestimmung eines Empfangszeitpunkts dynamisch anzupassen. Auf den Lichtempfänger 18, vorzugsweise als SiPM ausgestaltet, fällt während einer Messung eine Überlagerung aus Nutzlicht und Fremdlicht. Bei inaktivem Lichtsender 12 wird allein Fremdlicht detektiert, und dies wird in einem unter Bezugnahme auf die Figur 8 später noch erläuterten Messvorgehen mit Sendepause genutzt, um das isolierte Fremdlicht zu messen. Das Nutzlicht weist in einer bevorzugten Ausführungsform kurze Lichtpulse einer Breite von höchstens 2 ns auf. Das Fremdlicht hat typischerweise eine Bandbreite von 0-1 MHz. Der Lichtempfänger wird von einer Spannungsversorgung 54 mit einer Biasspannung vorgespannt, und zwar um eine gewisse Überspannung oberhalb der Durchbruchspannung der SPAD-Zellen. Die Überspannung stellt nahezu linear einen Verstärkungsfaktor ein.

Das Empfangssignal des Lichtempfängers 18 wird primär dem eigentlichen Messpfad zur Bestimmung der Lichtlaufzeit zugeführt, auch als Lichtlaufzeitpfad bezeichnet, der sich in der Darstellung der Figur 3 nach rechts hin anschließt. Dort durchläuft das Empfangssignal zunächst einen Hochpassfilter 56 einer ersten Grenzfrequenz von beispielsweise mindestens 100 MHz. Es ist auf die kurzen Pulse abgestimmt, die der Lichtlaufzeitmessung zugrunde liegen. Das Hochpassfilter 56 bewirkt praktisch eine Differenzierung des Empfangssignals, die den kurzen Puls der weiteren Auswertung und präzisen zeitlichen Lokalisierung noch besser zugänglich macht. Anschließend erfolgt, sofern erforderlich, eine Impedanzanpassung und Pegelanhebung oder bei Bedarf auch Pegelabschwächung in einem nicht gezeigten Verstärker. Es sind weitere nicht gezeigte Filter zur weiteren Pulsformung denkbar, beispielsweise ein Bandpassfilter. Dessen Grenzfrequenzen sind optimiert zwischen den beiden Anforderungen eines möglichst geringen Messfehlers und einer guten Mehrechofähigkeit. Das Empfangssignal soll also in seiner zeitlichen Charakteristik möglichst unverfälscht bleiben und zugleich rasch ausschwingen, damit keine Pulse ineinanderlaufen und somit verschiedene hintereinander angeordnete Objekte getrennt werden können. Unter Umständen ist es sinnvoll, das Bandpassfilter durch höhere Ordnungen weiter zu optimieren.

Ein Komparator 58 vergleicht das jeweilige gefilterte Empfangssignal mit einer Schwelle, das dadurch binarisiert und im Anschluss digital weiterverarbeitet wird. Der Komparator 58 weist demnach vorzugsweise zwei Eingänge auf, wobei an den einen Eingang des Empfangssignal und an den anderen Eingang die Schwelle angelegt ist. Vorzugsweise wird aus den binarisierten Werten in Messwiederholungen mit mehreren ausgesandten Lichtsignalen ein Histogramm aufgebaut, entsprechend dem einleitend genannten Pulsmittelungsverfahren der EP 1 972 961 A2. Alternativ zu dem Komparator 58 kann ein AD-Wandler mit größerer Bittiefe eingesetzt sein. Der Umschalter 72 zwischen Hochpassfilter 56 und Komparator 58, dessen Funktion später noch erläutert wird, kann vorläufig als direkte Verbindung verstanden werden.

In einer anschließenden TOF-Auswertung 60 wird anhand des binarisierten Signals ein Histogramm gesammelt und damit die Lichtlaufzeit bestimmt. Alternativ wird anstelle des Histogramms ein mehrwertig abgetastetes Signal ausgewertet. Der Empfangspuls ist darin jeweils zeitlich präzise erhalten und herausgearbeitet, so dass ein Empfangszeitpunkt beispielsweise aus der ersten steigenden Flanke bestimmt werden kann. Alternative Verfahren zum Lokalisieren des Empfangspulses sind eine Schwerpunktbestimmung desjenigen Anteils eines Peaks, der sich über die Schwelle oder eine weitere Schwelle erhebt, ein Parabel- oder sonstiger Funktionsfit oder die Bestimmung eines Nulldurchgangs eines von vorausgegangenen Filtern verursachten Überschwingers. Zusammen mit einer Information über den Sendezeitpunkt wird aus dem Empfangszeitpunkt die Lichtlaufzeit und somit letztlich der Abstand zu dem Objekt 16 ermittelt.

Der in dem Lichtempfänger 18 fließende Strom wird in einer Strombegrenzung 62 überwacht. Dies dient vorteilhaft dem thermischen Management und stellt sicher, dass die Verlustleistung im Bauteil innerhalb der Spezifikation bleibt. Wird von dem Strom bei starkem Lichteinfall ein Grenzwert überschritten, so wird mittels einer Aktivierung 64 ein höherer Strom abgeschnitten oder gedämpft. Praktisch kann die Spannung der Spannungsversorgung 54 als eine Kopfspannung verstanden werden, und die Strombegrenzung 62 erhöht bei Bedarf eine entsprechende Fußspannung, so dass sich die Arbeitsspannung des Lichtempfängers 18 reduziert. Damit wird die Überspannung und somit die Verstärkung des Lichtempfängers 18 abgesenkt, und bei einer Arbeitsspannung unterhalb der Durchbruchspannung der SPAD-Zellen wird der Lichtempfänger 18 so unempfindlich, dass er für alle praktischen Belange als abgeschaltet angesehen werden kann.

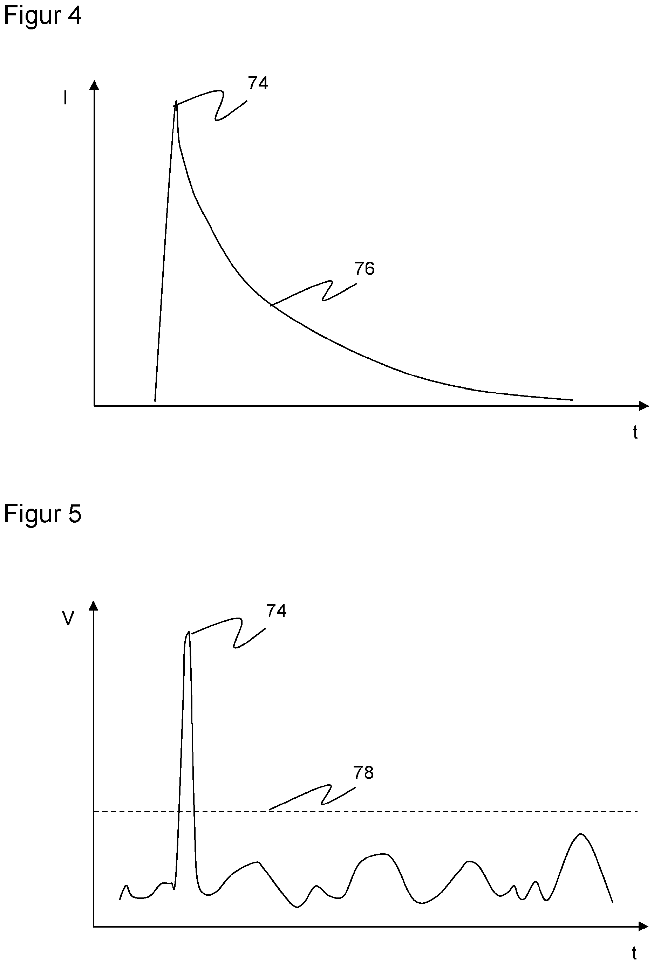

Der Strom, der in dem Lichtempfänger 18 fließt, oder ein Spannungssignal, das diesen Strom misst, wird außerdem einem Tiefpassfilter 66 einer Grenzfrequenz von beispielsweise höchstens 2 MHz zugeführt. Dieses tiefpassgefilterte Signal stellt eine Pegelinformation dar, und diese wird von einer Schwellenanpassung 68 verwendet, um die Schwelle des Komparators 58 anzupassen. Für eine dynamische Schwellenanpassung wird die Pegelinformation analog auf die Schwelle aufaddiert, die somit entsprechend der Pegelinformation verschoben wird. Zuvor wird die Pegelinformation noch reskaliert oder heruntergeteilt, wofür ein Potentiometer eingesetzt wird. Damit ist das Ausmaß der dynamischen Schwellenanpassung einstellbar, und durch das Reskalieren können auch Bauteiltoleranzen berücksichtigt werden. Die Schwelle ist vorzugsweise zunächst zur Einstellung einer Grundempfindlichkeit auf eine Basisschwelle gesetzt, die einen Grundzustand darstellt, aus dem heraus die Schwelle dann jeweils dynamisch in Abhängigkeit von der Pegelinformation verschoben oder nachgeführt wird. Die dynamische Schwellenanpassung wird noch unter Bezugnahme auf die Figuren 4 bis 7 weiter erläutert.

Zusätzlich kann optional das tiefpassgefilterte Signal in einem AD-Wandler 70 für die Strommessung abgetastet werden. Im Gegensatz zu dem Komparator 58 ist hier nach der Tiefpassfilterung keine hohe Zeitauflösung erforderlich. Dadurch sind die schnellen Veränderungen aufgrund des Lichtpulses ohnehin nicht mehr im Signal abgebildet. Der Zweck der Strommessung nach Tiefpassfilterung ist, wie auch schon für die Schwellenanpassung 68, eine eher summarische Betrachtung des Pegels oder der Intensität des Lichteinfalls. Der AD-Wandler 70 stellt ein digitales tiefpassgefiltertes Signal bereit, aus dem sich eine Pegelinformation ableiten lässt, sofern diese über die Schwellenanpassung 68 hinaus noch benötigt wird, insbesondere als zusätzliche Ausgabegröße oder als Hilfsgröße zur Anpassung oder Korrektur der Lichtlaufzeitmessung. Wie später unter Bezugnahme auf die Figur 8 noch erläutert, kann in einer Sendepause ein reines Fremdlicht ohne Überlagerung mit Nutzlicht erfasst werden. In diesem Fall ist es möglich, das isolierte Fremdlichtsignal digital zur Verfügung zu stellen. Die Tiefpassfilterung und langsame Abtastung bedeutet für das ohnehin niederfrequente Fremdlicht keine nennenswerte Beschränkung. Ferner ist denkbar, anhand des reinen Fremdlichtsignals durch Vergleich oder Differenzbildung mit einem Messsignal aus einer Messphase, das dann eine Überlagerung von Fremdlicht und Nutzlicht ist, eine bereinigte Pegelinformation allein des Nutzlichts zu gewinnen.

In einigen Ausführungsformen weist der Lichtempfänger 18 mehrere Empfangskanäle auf. Das können verschiedene SPAD-Zellen, Gruppen von SPAD-Zellen oder mehrere SiPMs sein, die jeweils ein Summensignal als Empfangssignal erzeugen. Ein unter Bezugnahme auf Figur 2 erläuterter Mehrscanner beispielsweise erzeugt mit einer derartigen Vielzahl von Empfangskanälen ein Empfangssignal je Scanlage. Es ist denkbar, die vorgestellte Auswertungsstruktur entsprechend zu vervielfältigen. Bevorzugt wird aber die Auswertung mit jeweils einem anderen Empfangskanal verbunden, beispielsweise mittels Multiplexing.

Figur 3 deutet einen weiteren Empfangskanal, von denen es noch mehr geben kann, in gestrichelten Blöcken an. Der weitere Empfangskanal weist einen weiteren Lichtempfänger 18a auf, der wie erläutert abweichend von der Darstellung in räumlicher Nähe zum Lichtempfänger 18a angeordnet beziehungsweise durch eine andere Gruppe von SPAD-Zellen desselben Lichtempfängers gebildet sein kann. Zu dem Empfangskanal gehört weiterhin eine eigene Strombegrenzung 62a mit Aktivierung 64a sowie vorzugsweise ein eigenes Tiefpassfilter 66a beziehungsweise Hochpassfilter 56a. Ein jeweiliger Umschalter 72, 72a schaltet zwischen den Empfangskanälen um. Die Aktivierung 64, 64a kann für die entsprechende Versorgung mit einer Biasspannung der betroffenen Bereiche des Lichtempfängers 18, 18a sorgen.

Figur 4 zeigt einen schematischen zeitabhängigen Verlauf eines idealisierten Empfangssignals bei Einfall eines Lichtpulses. Sobald die SPAD-Zellen aufgrund des Lichtpulses auslösen, dort also ein Lawinenereignis stattfindet, steigt das Empfangssignal mit einer sehr steilen Flanke auf einen Peak oder ein Maximum 74 an. In der anschließenden Totphase 76 laden die SPAD-Zellen wieder auf. Der idealisierte Verlauf ignoriert Rauschen und die Tatsache, dass aufgrund von Rausch- und insbesondere Fremdlichtereignissen SPAD-Zellen zum Zeitpunkt des Einfalls des Lichtpulses möglicherweise gar nicht zur Verfügung stehen, weil sie sich bereits vorzeitig in ihrer Totphase befinden.

Figur 5 zeigt einen schematischen zeitabhängigen Verlauf eines rauschbehafteten, vorverarbeiteten Empfangssignals bei Einfall eines Lichtpulses. Ein derartiges Empfangssignal liegt beispielsweise in dem Lichtlaufzeitpfad nach der Hochpasskopplung an dem Komparator 58 der Figur 3 an. Das Hochpassfilter 56 sorgt praktisch für eine Differenzierung, so dass das Maximum 74 eine Ableitung der steigenden Flanke gemäß Figur 4 ist. Dieses Maximum 74 erhebt sich aus einem Rausch- oder Fremdlichthintergrund. Die Schwelle 78 für den Komparator 58 ist so zu setzen beziehungsweise dynamisch anzupassen, dass sie das Rauschen klar von dem Maximum 74 trennt. Dafür ist insbesondere ein bestimmtes Vielfaches der Standardabweichung des Rauschens geeignet, beispielsweise 1,5 σ.

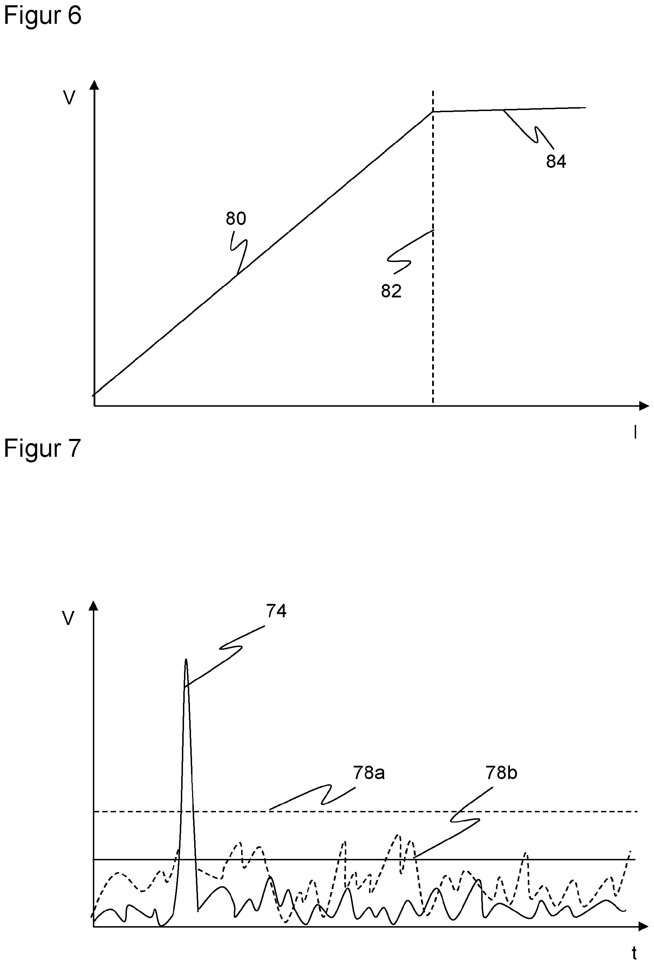

Figur 6 zeigt einen schematischen Spannungsverlauf in Abhängigkeit von dem in dem Lichtempfänger 18 fließenden Strom für die Strombegrenzung 62. In einem ersten linearen Arbeitsbereich 80 steigt die Spannung am Messwiderstand der Strombegrenzung 62 linear mit dem Strom. Ab einem Grenzstrom 82 durch direkte Beleuchtung oder höhere Fremdlichteinstrahlung wird in einem zweiten Arbeitsbereich 84 die Spannung drastisch limitiert. Somit liegt ein maximales Rauschen bei dem Grenzstrom 82 an. Mit abnehmendem Fremdlicht reduziert sich auch das Rauschen.

Figur 7 zeigt einen schematischen Verlauf zweier rauschbehafteter, vorverarbeiteter Empfangssignale, nämlich mit gestrichelter Linie bei einem höheren und mit durchgezogener Linie bei einem geringeren Rauschanteil. Dementsprechend wird an der Strombegrenzung 62 ein höherer oder geringerer Strom gemessen. Die entsprechende Pegelinformation wird heruntergeteilt und damit die Schwelle des Komparators 58 dynamisch angepasst, wie zu Figur 3 beschrieben. Dementsprechend ist die mit gestrichelter Linie eingezeichnete Schwelle 78a für das Empfangssignal mit höherem Rauschen auf ein höheres Niveau verschoben als die mit durchgezogener Linie eingezeichnete Schwelle 78b für das Signal mit geringerem Rauschen. Angestrebt ist, jeweils einen gewünschten Abstand der Schwelle 78a, 78b zum Rauschen einzuhalten, was insbesondere durch ein bestimmtes Vielfaches der Standardabweichung ausgedrückt ist. Da das Rauschen einer Quadratwurzelbeziehung gehorcht und das Herunterteilen der Pegelinformation vorzugsweise durch eine lineare Reskalierung mit einfachen Bauteilen erfolgt, wird dieses Ziel für zumindest einige Rauschpegel nur näherungsweise erreicht.

Figur 8 zeigt eine schematische Darstellung des zeitlichen Ablaufs einer bevorzugten Ausführungsform der Lichtlaufzeitmessung mit gesonderter zeitversetzter Fremdlichtbestimmung. Aufgetragen ist die Aktivität des Lichtsenders 12 beziehungsweise dessen ausgesandte Lichtintensität über der Zeit. Zunächst ist in einer Sendepause der Lichtsender 12 nicht aktiv, so dass der Lichtempfänger 18 ausschließlich Fremdlicht registriert. Das Empfangssignal ist während der Sendepause nicht von Nutzlicht überlagert, weil der Lichtsender 12 inaktiv ist, so dass das Empfangssignal unmittelbar als Fremdlichtsignal verwendet werden kann.

In einer vorzugsweise direkt anschließenden Messphase wird nun der Lichtsender 12 für eine Lichtlaufzeitmessung aktiviert. In der Messphase wird eine Überlagerung von Fremdlicht und Nutzlicht erfasst. Dabei wird bevorzugt in einer Art Burst-Betrieb nacheinander eine Vielzahl von Sendepulsen für eine entsprechende Vielzahl von Messwiederholungen ausgesandt und wieder empfangen. Damit wird ein Pulsmittelungsverfahren mit Mittelung über mehrere Messwiederholungen umgesetzt. Besonders bevorzugt wird das jeweilige Empfangssignal lediglich in zwei Zuständen binarisiert, wie schon zu Figur 3 beschrieben. Alternativ wird nur ein einzelner Sendepuls ausgesandt und das Empfangssignal mit höherer Bittiefe abgetastet.

Am Ende der Messphase schließt sich eine Auswertungsphase an. Dies kann sich mit einer Sendepause für eine erneute Bestimmung des Fremdlichtsignals überschneiden beziehungsweise direkt darin übergehen. Es ist auch denkbar, das Fremdlichtsignal nicht vor jeder Messphase zu erfassen, einen jedenfalls einigermaßen statischen Fremdlichteinfall zu unterstellen und direkt in eine weitere Messphase überzugehen. Dabei kommt es dann auf die Leistungsfähigkeit der Auswertungselektronik an, wie dicht Messphase nacheinander folgen können.

Figur 9 zeigt einen schematischen zeitlichen Verlauf eines durch den Lichtempfänger 18 fließenden Stroms, also beispielsweise das Ausgangssignal des AD-Wandlers 70, bei Erfassung eines natürlichen Objekts 16. Wie zu Figur 3 erläutert, ist das Signal tiefpassgefiltert. In der anfänglichen Sendepause wird der Lichtempfänger 18 bereits aktiviert, d.h. mit einer Biasspannung oberhalb der Durchbruchspannung vorgespannt. Aufgrund von Fremdlichtereignissen steigt der Strom auch bei inaktivem Lichtsender 12 und somit ohne Sendepulse schon auf einen gewissen Pegel an. Dieses Fremdlichtsignal wird mittels AD-Wandler 70 erfasst.

In der anschließenden Messphase ist der Lichtsender 12 aktiviert. Der gemessene Strom entspricht einer Überlagerung aus Fremdlicht und Nutzlicht. Die Empfangspulse sind als solche in Figur 9 wegen des Tiefpassfilters 66 nicht zu sehen, ihre langsamen Anteile tragen aber prinzipiell zu einer Anhebung des Pegels bei. Allerdings ist der zusätzliche Nutzlichtbeitrag wegen der bereits durch das Fremdlicht ausgelösten Zellen in dem Lichtempfänger bei einem natürlichen Objekt 16 gering.

Nach der Messphase werden sowohl der Lichtsender 12 als auch der Lichtempfänger 18 deaktiviert. Der gemessene Strom klingt noch ab. Diese Abklingphase könnte zur weiteren Auswertung mit herangezogen werden, liefert aber letztlich keine neue Information über den Pegel am Ende der Messphase hinaus.

Figur 10 zeigt einen schematischen zeitlichen Verlauf eines durch den Lichtempfänger 18 fließenden Stroms nun bei Erfassung eines Reflektors als Objekt 16. Die einzelnen Phasen sind die gleichen wie soeben zu Figur 9 beschrieben. Allerdings steigt der Pegel während der Messphase wegen des von dem Reflektor erzeugten hochenergetischen Empfangspulses deutlich höher an.

Somit kann zunächst in der Sendepause der Fremdlichtstrom ermittelt werden. Während der Messphase wird der von einer Überlagerung aus Fremdlicht und Nutzlicht erzeugte Strom gemessen. Die Differenz der beiden Ströme lässt einen Schluss auf die Stärke des Empfangssignals zu, sie ist eine Pegelinformation des Nutzlichts. Ganz allgemein kann daraus durch entsprechende Reskalierung ein Remissionsvermögen des Objekts 16 bestimmt werden. Ein sehr deutlich erhöhter Strom wird als Reflektor interpretiert. In einer besonders vorteilhaften Ausführungsform wird lediglich zwischen einem natürlichen Objekt und einem Reflektor unterschieden, indem die Differenz der beiden Ströme während der Sendepause und während der Messphase mit einer Reflektorschwelle verglichen wird. Eine überschwellige Differenz der Ströme bedeutet Reflektor, eine unterschwellige Differenz der Ströme bedeutet ein natürliches Ziel. Im letzteren Fall ist noch zu ergänzen, dass überhaupt ein Abstand bestimmt worden sein muss, ansonsten ist möglicherweise der Überwachungsbereich 14 leer. Im Falle einer Mehrecho- oder Mehrzielauswertung kann wegen der Tiefpassfilterung und langsamen Abtastung nicht ermittelt werden, aus welchem der mehreren Echos das hochenergetische Ereignis stammt. Hier wird davon ausgegangen, dass hinter einem starken Ereignis kein weiteres mehr stattfinden kann und vorangehende Ereignisse lediglich niederenergetische Störechos beispielsweise durch eine Frontscheibenverschmutzung, Regentropfen oder Nebel sind. Als Reflektor wird folglich das jeweilige erste starke Echo angenommen.

Der Einfluss der Pegelinformation auf die Schwelle des Komparators 58 auf analogem Weg wurde bereits beschrieben. Die digitalisierte Fremdlicht- oder Pegelinformation kann alternativ oder zusätzlich für eine Schwellenanpassung auf digitalem Weg beziehungsweise während der digitalen Lichtlaufzeitmessung der TOF-Auswertung 60 verwendet werden. Pegelinformation oder speziell das Remissionsvermögen beziehungsweise eine Reflektorinformation können ferner für interne Korrekturen und Anpassungen verwendet werden. Als ein Beispiel wird eine Farb- oder Schwarzweißkorrektur vorgenommen, d.h. die Lichtlaufzeitje nach Pegel korrigiert. Die erforderlichen Korrekturwerte können mit einem Graukeil eingelernt und als Korrekturtabelle oder -funktion hinterlegt sein. Weiterhin ist denkbar, das Verfahren zur Lichtlaufzeitmessung anzupassen, beispielsweise für dunkle Ziele, helle Ziele und Reflektoren jeweils andere Algorithmen zu verwenden. Alternativ oder zusätzlich werden die Pegelinformation, das Remissionsvermögen oder eine Reflektorinformation als Messgröße ausgegeben. Die Reflektorinformation kann insbesondere als binäres Flag ausgegeben werden.

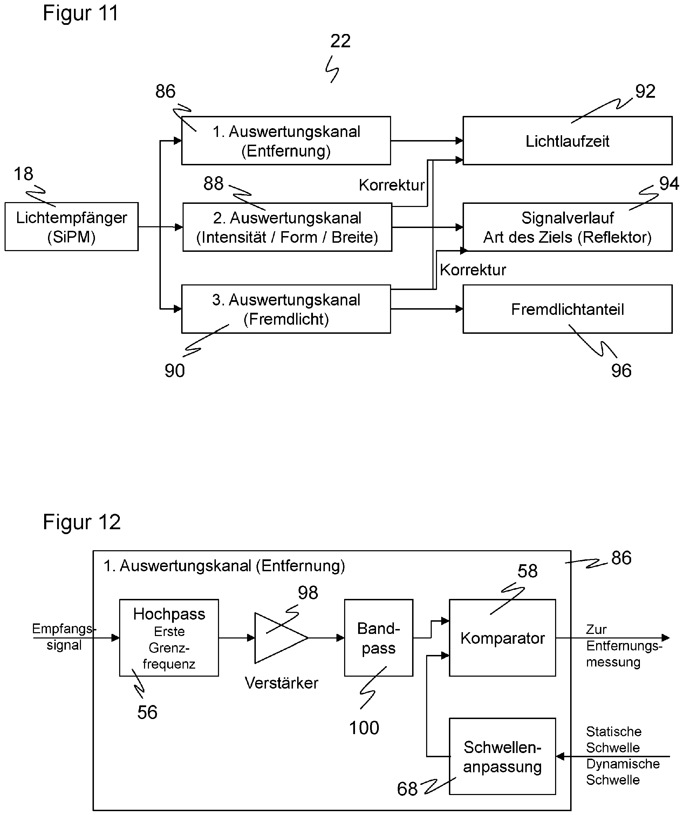

Figur 11 zeigt eine vereinfachte Übersichtsdarstellung einer mehrkanaligen Auswertungsstruktur der Steuer- und Auswertungseinheit 22. Dies ist eine Alternative beziehungsweise Weiterbildung zu der Ausgestaltung gemäß Figur 3 und einer zeitversetzten Messung mit Sendepause gemäß Figur 8. Obwohl als eigene Ausführungsformen beschrieben, sind die jeweiligen Komponenten und Funktionen zwischen den alternativen Ausführungsformen übertragbar.

In der mehrkanaligen Auswertungsstruktur wird das Empfangssignal des Lichtempfängers 18 drei Auswertungskanälen 86, 88, 90 zugeführt, wobei der dritte Auswertungskanal 90 zunächst optional ist. Die Auswertungskanäle können 86, 88, 90 im hinteren Teil wieder wenigstens teilweise gemeinsam ausgebildet sein, insbesondere um füreinander Korrekturwerte zu liefern. Das Empfangssignal kann ein Summensignal zusammengeführter Lawinenphotodiodenelemente 20 beziehungsweise eines SiPM sein. Die jeweilige Gruppe von Lawinenphotodiodenelementen 20, die zu dem Empfangssignal beiträgt, kann vorzugsweise im Betrieb ausgewählt oder umgeschaltet werden.

Auf der rechten Seite der Figur 11 sind die jeweiligen Ausgabegrößen 92, 94, 96 der Auswertungskanäle 86, 88, 90 dargestellt. Der erste Auswertungskanal 86 ist ein schneller, sehr hochfrequenter Kanal, mit dem eine präzise Bestimmung der Lichtlaufzeit 92 und damit die eigentliche Entfernungsmessung erfolgt. Der erste Auswertungskanal 86 kann als Ausgestaltung oder weitere Variante des Lichtlaufzeitpfads der Figur 3 verstanden werden. Der zweite Auswertungskanal 88 ist ein schneller Kanal mit großer Bandbreite, der einen Signalverlauf 94 bestimmt, etwa eine Bestimmung einer Pulsbreite, eines Pulsverlaufs oder eines Pegels beziehungsweise RSSIs. Der Signalverlauf 94 kann eine weitere externe Ausgabegröße sein, wie die Lichtlaufzeit 92 beziehungsweise der daraus bestimmte Abstand. Außerdem kann der Signalverlauf 94 dazu dienen, die Bestimmung der Lichtlaufzeit 92 zu verbessern oder zu korrigieren. Der dritte Auswertungskanal 90 ist ein Messkanal für einen Gleichlicht- oder Fremdlichtanteil 96. Der Fremdlichtanteil 96 kann eine weitere externe Ausgabegröße sein. Außerdem kann der Fremdlichtanteil genutzt werden, um die Bestimmung der Lichtlaufzeit 92 oder des Signalverlaufs 94 zu verbessern.

Figur 12 zeigt eine detaillierte Darstellung einer beispielhaften Ausführungsform des ersten Auswertungskanals 86 zur Entfernungsmessung. Die gezeigten einzelnen Elemente des ersten Auswertungskanals 86 ebenso wie der noch zu beschreibenden weiteren Auswertungskanäle 88, 90 sind besonders vorteilhaft, es kann aber in anderen Ausführungsformen nur eine Teilauswahl vorhanden sein. Wie schon erwähnt, kann der erste Auswertungskanal 86 als eine Ausführungsform des Lichtlaufzeitpfads in Figur 3 verstanden werden. Dementsprechend wird das Empfangssignal zunächst dem Hochpassfilter 56 einer ersten Grenzfrequenz zugeführt. Anschließend erfolgt, sofern erforderlich, eine Impedanzanpassung und Pegelanhebung oder bei Bedarf auch Pegelabschwächung in einem optionalen ersten Verstärker 98. Ein schon zu Figur 3 angesprochenes erstes Bandpassfilter 100 dient der weiteren Pulsformung.

Der Komparator 58 vergleicht das jeweilige gefilterte Empfangssignal mit der Schwelle, die von der Schwellenanpassung dynamisch angepasst wird. Die Information für das jeweilige Ausmaß der Anpassung oder Nachführung, also eine Basisschwelle oder statische Schwelle sowie eine dynamische Schwelle, ist hier als Rückfluss von einer übergeordneten Einheit dargestellt. Die dynamische Schwelle wird dabei aus einer Pegelinformation des zweiten Auswertungskanals 88 abgeleitet.

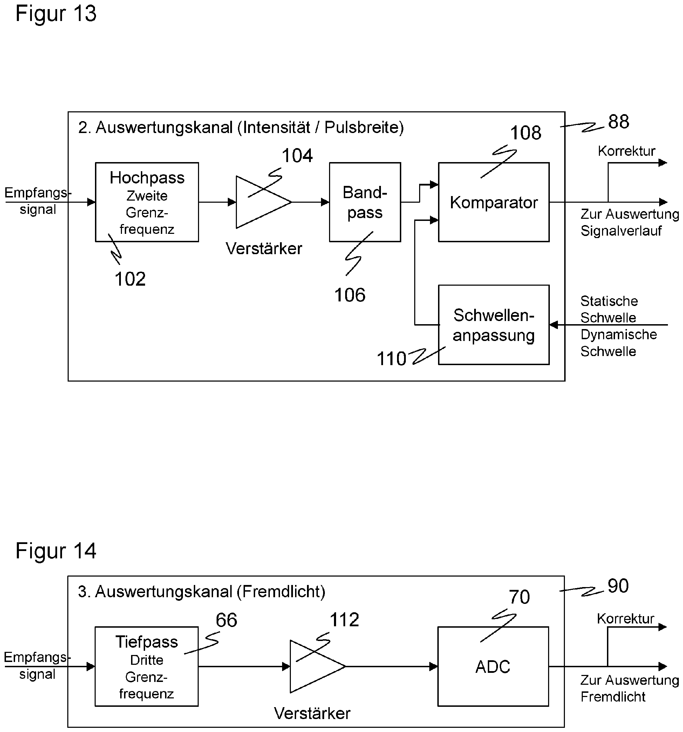

Figur 13 zeigt eine detaillierte Darstellung einer beispielhaften Ausführungsform des zweiten Auswertungskanal 88 zur Bestimmung des Signalverlaufs 94. Mit Signalverlauf 94 sind hier verschiedene Möglichkeiten bezeichnet, Charakteristika des Empfangssignals oder Empfangspulses zu erfassen, die mit einer Pegelinformation korrelieren, insbesondere eine Pulsbreite, eine Pulsform, ein Pegel oder einen RSSI. Der zweite Auswertungskanal 88 hat einen ähnlichen Aufbaue wie der erste Auswertungskanal 86, ermöglicht aber allein schon durch unabhängige Auslegung seiner Komponenten eine jeweilige gezielte Optimierung.

Das Empfangssignal oder ein Abschnitt davon wird einem zweiten Hochpassfilter 102 einer zweiten Grenzfrequenz zugeführt. Die Wirkungsweise ist prinzipiell ähnlich derjenigen des Hochpassfilter 56 im ersten Auswertungskanal 86, jedoch können erste und zweite Grenzfrequenz unabhängig voneinander gewählt werden. Vorzugsweise ist die zweite Grenzfrequenz kleiner als die erste Grenzfrequenz. Das führt zu einer schwächeren Differenzierung und bewirkt eine Pulsverbreiterung bei stärker werdenden Empfangssignalen. Dies ist ein erwünschter Effekt, weil der Signalverlauf und insbesondere die Pulsbreite auf diese Weise genauer erfasst und unterschieden werden kann. Dabei kann die Pulsbreite schon als ein Maß für den Pegel oder RSSI herangezogen werden, denn der Pegel wirkt sich auf die Pulsbreite und insbesondere das Nachpulsen aus. Es können aber auch andere Maße gebildet werden, beispielsweise ein Integral beziehungsweise eine Summe über einen Histogrammabschnitt eines Empfangspulses. Im ersten Auswertungskanal 86 wäre eine Pulsverbreiterung ganz und gar unerwünscht, weil dadurch eine Schwerpunktermittlung einen höheren Messfehler erhält und eine Mehrechofähigkeit teilweise verlorengeht, denn in kurzem Abstand aufeinanderfolgende Pulse neigen noch stärker zum Ineinanderlaufen, wenn sie breiter werden.

Ein optionaler zweiter Verstärker 104 kann das Empfangssignal anheben oder alternativ abschwächen. Zur weiteren Signalformung kann ein zweites Bandpassfilter 106 vorgesehen sein, dessen Grenzfrequenzen anders als im ersten Bandpassfilter 100 nun eher auf das Herausarbeiten des Signalverlaufs als auf zeitliche Präzision optimiert sind.

In einem zweiten Komparator 108 wird das jeweilige gefilterte Empfangssignal analog der Funktion des Komparators 58 mit einer zweiten Schwelle binarisiert oder digitalisiert. Insbesondere entsteht dadurch ein zweites Histogramm, aus dem der Signalverlauf 94 gewonnen wird. Eine zweite Schwellenanpassung 110 setzt eine passende statische zweite Schwelle oder Basisschwelle. Eine dynamische Schwellenanpassung oder Schwellennachführung der zweiten Schwelle ist ebenfalls möglich.

Aus dem derart binarisierten oder digitalisierten Empfangssignal des zweiten Auswertungskanal 88 wird nun der Signalverlauf 94 bestimmt. Der Signalverlauf 94 kann für vergleichbare Zwecke oder Funktionen verwendet werden wie die Pegelinformation. Es kann eine für sich interessante weitere Messgröße sein, die extern beispielsweise an der Sensorschnittstelle 52 zur Verfügung gestellt wird. Für eine solche Ausgabegröße kann auch schon eine Verarbeitung in dem Sensor 10 stattfinden. Beispielsweise wird eine Pegelinformation des Signalverlaufs 94 mit einer Reflektorschwelle verglichen und so erkannt, ob das angetastete Objekt 16 ein Reflektor ist oder nicht. Eine entsprechende Reflektorinformation kann insbesondere als binäres Flag ausgegeben werden. Stattdessen oder zusätzlich kann der Signalverlauf 94 für interne Korrekturen und Anpassungen verwendet werden. Als ein Beispiel wird eine Farb- oder Schwarzweißkorrektur anhand einer Pegelinformation vorgenommen, d.h. die Lichtlaufzeit je nach Pegel korrigiert. Die erforderlichen Korrekturwerte können mit einem Graukeil eingelernt und als Korrekturtabelle oder -funktion hinterlegt sein. Als ein weiteres Beispiel erfolgt die Bestimmung des Empfangszeitpunkts aus dem Empfangssignal des ersten Auswertungskanals 86 anhand der Flanke oder des Schwerpunkts. Bei geringem Pegel ist das Empfangssignal eher rauschdominiert, womit eine Schwerpunktbestimmung besser umgehen kann. Bei höherem Pegel erhebt sich der Empfangspuls deutlich aus dem Rauschen und ermöglicht eine präzise zeitliche Lokalisierung anhand der Flanke. Die Umschaltung zwischen Schwerpunkt- und Flankenauswertung kann beispielsweise durch Vergleich mit einer Pegelschwelle erfolgen. Wie schon erwähnt, kann hier jeweils eine Pulsbreite stellvertretend für den Pegel verwendet werden.

Figur 14 zeigt eine detaillierte Darstellung einer beispielhaften Ausführungsform des optionalen dritten Auswertungskanals 90 zur Fremdlichtbestimmung. In gewisser Weise kann schon der entsprechende Signalweg in Figur 3 als dieser Auswertungskanal 90 aufgefasst werden. Das Empfangssignal wird darin dem Tiefpassfilter 66 zugeführt, dessen dritte Grenzfrequenz nun im Gegensatz zu den beiden anderen Auswertungskanälen 86, 88 eine obere und keine untere Grenzfrequenz ist. Damit werden die schnellen Signale der Pulse des Nutzlichts abgeschnitten, und nur ein Gleichlichtanteil und langsam veränderliche Anteile des Empfangssignals werden durchgelassen. Veränderungen des Umgebungslichts während des Rotierens eines Laserscanners werden in diesem Zusammenhang noch als langsam aufgefasst, denn das soll vorzugsweise durchaus berücksichtigt werden. Die dritte Grenzfrequenz liegt beispielsweise im Bereich einiger zehn Kilohertz bis hin zu einigen Megahertz. Das gefilterte Empfangssignal kann in einem optionalen dritten Verstärker 112 nachverstärkt werden, ehe es in dem AD-Wandlers 70 digitalisiert wird.

Der auf diese Weise bestimmte Fremdlichtanteil 96 kann eine für sich interessante weitere Messgröße sein, die extern beispielsweise an der Sensorschnittstelle 52 zur Verfügung gestellt wird. Alternativ oder zusätzlich kann über den Fremdlichtanteil 96 eine Entfernungskorrektur für den ersten Auswertungskanal 86 erfolgen und/oder damit der Signalverlauf 94 korrigiert werden. Ferner kann der Fremdlichtanteil 96 für die dynamische Nachführung der Schwelle des Komparators 58 mittels der Schwellenanpassung 68 und/oder der zweiten Schwelle mittels der zweiten Schwellenanpassung 110 verwendet werden. Alternativ ist für die Schwellennachführungen mindestens ein weiterer Auswertungskanal denkbar, der insbesondere ein eigenes Tiefpassfilter mit für die Schwellennachführung optimierter Grenzfrequenz aufweist.

Der Sensor 10 verfügt vorzugsweise auch über eine nicht gezeigte Temperaturkompensation. Mittels eines Temperaturfühlers wird die Temperatur in dem Sensor 10 beziehungsweise des Lichtempfängers 18 gemessen. Die Temperaturabhängigkeiten des Lichtempfängers 18 werden vorab gemessen oder dessen Datenblatt entnommen, und dementsprechend können die Ausgabewerte und Korrekturwerte temperaturkompensiert werden.

## Patentansprüche

1. Entfernungsmessender optoelektronischer Sensor (10) zur Erfassung und Abstandsbestimmung eines Objekts (16) in einem Überwachungsbereich (14), wobei der Sensor (10) einen Lichtsender (12) zum Aussenden eines Lichtsignals (34), einen Lichtempfänger (18) mit mindestens einem Lichtempfangselement (20) zum Erzeugen eines Empfangssignals aus dem von dem Objekt (16) remittierten Lichtsignal (38) sowie eine Steuer- und Auswerteeinheit (22) aufweist, die dafür ausgebildet ist, aus dem Empfangssignal eine Lichtlaufzeit und damit den Abstand des Objekts (16) zu bestimmen und dafür das Empfangssignal zur Bestimmung eines Empfangszeitpunkts mit einer Schwelle zu bewerten, wobei die Steuer- und Auswertungseinheit (22) weiterhin dafür ausgebildet ist, eine Pegelinformation des Empfangssignals zu bestimmen und mittels der Pegelinformation die Schwelle dynamisch anzupassen und die Steuer- und Auswertungseinheit (22) ein Tiefpassfilter (66) aufweist, dem das Empfangssignal vor Ermittlung der Pegelinformation zugeführt wird,
**dadurch gekennzeichnet,**
**dass** die Steuer- und Auswertungseinheit (22) dafür ausgebildet ist, die Pegelinformation aus dem Empfangssignal als Fremdlichtsignal in einer Sendepause bei inaktivem Lichtsender (12) zu erfassen, so dass es keine Überlagerung mit Nutzlicht gibt,
und für die dynamische Schwellenanpassung die Pegelinformation analog auf die Schwelle aufzuaddieren, wobei die Pegelinformation zuvor noch mittels Potentiometer linear angepasst oder mittels Potentiometer heruntergeteilt wird.

2. Sensor (10) nach Anspruch 1,
wobei die Steuer- und Auswertungseinheit (22) einen Lichtlaufzeitpfad mit einer Digitalisierungseinheit (58) aufweist, die das Empfangssignal auf Basis der Schwelle digitalisiert, wobei der Lichtlaufzeitpfad insbesondere ein erstes Hochpassfilter (56) aufweist.

3. Sensor (10) nach Anspruch 2,
wobei die Digitalisierungseinheit (58) als Komparator mit einem ersten Eingang und einem zweiten Eingang ausgebildet ist, wobei das Empfangssignal an dem ersten Eingang und die Schwelle an dem zweiten Eingang angelegt ist.

4. Sensor (10) nach Anspruch 3,
wobei die Steuer- und Auswertungseinheit (22) dafür ausgebildet ist, an dem zweiten Eingang eine Basisschwelle anzulegen und die Basisschwelle aus der Pegelinformation auf die dynamisch angepasste Schwelle zu verschieben.

5. Sensor (10) nach einem der vorhergehenden Ansprüche,
wobei die Steuer- und Auswertungseinheit (22) dafür ausgebildet ist, die dynamische Anpassung der Schwelle anzuschalten oder abzuschalten.

6. Sensor (10) nach einem der vorhergehenden Ansprüche,
wobei die Steuer- und Auswertungseinheit (22) dafür ausgebildet ist, für die Bestimmung der Pegelinformation einen in dem Lichtempfänger (18) fließenden Strom zu messen.

7. Sensor (10) nach Anspruch 6,
wobei die Steuer- und Auswertungseinheit (22) für eine Strombegrenzung (62) ausgebildet ist, die anhand des gemessenen Stroms eine Vorspannung des Lichtempfängers (18) absenkt, damit der in dem Lichtempfänger (18) fließende Strom einen für das Bauteil schädlichen Grenzstrom nicht überschreitet.

8. Sensor (10) nach einem der vorhergehenden Ansprüche,
wobei die Steuer- und Auswertungseinheit (22) eine umschaltbare Auswertungsanordnung für die Bestimmung der Lichtlaufzeit und der Pegelinformation aufweist, die mittels eines Umschalters (72) mit verschiedenen Lichtempfangselementen (20) oder Gruppen von Lichtempfangselementen (20) verbunden werden kann.

9. Sensor (10) nach einem der vorhergehenden Ansprüche,
der als Laserscanner ausgebildet ist, insbesondere als Mehrlagenscanner, und der eine bewegliche Ablenkeinheit (24) aufweist, mit deren Hilfe die Lichtsignale (34) periodisch durch den Überwachungsbereich (14) geführt werden.

10. Sensor (10) nach einem der vorhergehenden Ansprüche,
wobei das Lichtempfangselement (20) mit einer Vorspannung oberhalb einer Durchbruchspannung vorgespannt und somit in einem Geiger-Modus betrieben ist.

11. Verfahren zur optischen Erfassung und Abstandsbestimmung eines Objekts (16) in einem Überwachungsbereich (14), wobei ein Lichtsender (12) ein Lichtsignal (34) aussendet, ein Lichtempfänger (18), der mindestens ein Lichtempfangselement (20) aufweist, das insbesondere mit einer Vorspannung oberhalb einer Durchbruchspannung vorgespannt und somit in einem Geiger-Modus betrieben wird, aus dem von dem Objekt (16) remittiertem Lichtsignal (38) ein Empfangssignal erzeugt, aus dem Empfangssignal eine Lichtlaufzeit und damit der Abstand des Objekts (16) bestimmt und das Empfangssignal dafür mit einer Schwelle bewertet wird, wobei eine Pegelinformation des Empfangssignals bestimmt und mittels der Pegelinformation die Schwelle dynamisch angepasst wird und wobei das Empfangssignal vor Ermittlung der Pegelinformation einem Tiefpassfilter (66) zugeführt wird,
**dadurch gekennzeichnet,**
**dass** die Pegelinformation aus dem Empfangssignal als Fremdlichtsignal in einer Sendepause bei inaktivem Lichtsender (12) erfasst wird, so dass es keine Überlagerung mit Nutzlicht gibt, und für die dynamische Schwellenanpassung die Pegelinformation analog auf die Schwelle aufaddiert wird, wobei die Pegelinformation zuvor noch mittels Potentiometer linear angepasst oder mittels Potentiometer heruntergeteilt wird.

## Claims

1. A distance-measuring optoelectronic sensor (10) for detecting and determining the distance of an object (16) in a monitoring area (14), the sensor (10) comprising a light transmitter (12) for transmitting a light signal (34), a light receiver (18) having at least one light-receiving element (20) for generating a received signal from the remitted light signal (38) remitted by the object (16), and a control and evaluation unit (22) configured to determine a light time of flight and thus the distance of the object (16) from the received signal and to evaluate the received signal with a threshold in order to determine a reception time, the control and evaluation unit (22) further being configured to determine level information of the received signal and to dynamically adjust the threshold by means of the level information, and the control and evaluation unit (22) comprising a low-pass filter (66) to which the received signal is fed before the level information is determined,
**characterized in that** the control and evaluation unit (22) is configured to detect the level information from the received signal as an extraneous light signal in a transmission pause when the light transmitter (12) is inactive, so that there is no superimposition with useful light,
and to add the level information to the threshold analogously for the dynamic threshold adjustment, the level information being linearly adjusted beforehand by means of a potentiometer or divided down by means of a potentiometer.

2. The sensor (10) according to claim 1,
wherein the control and evaluation unit (22) comprises a light time of flight path with a digitizing unit (58) that digitizes the received signal on the basis of the threshold, wherein the light time of flight path in particular comprises a first highpass filter (56).

3. The sensor (10) according to claim 2,
wherein the digitizing unit (58) is configured as a comparator having a first input and a second input, wherein the received signal is applied to the first input and the threshold is applied to the second input.

4. The sensor (10) according to claim 3,
wherein the control and evaluation unit (22) is configured to apply a base threshold to the second input and to shift the base threshold from the level information to the dynamically adapted threshold.

5. The sensor (10) according to any of the preceding claims,
wherein the control and evaluation unit (22) is configured to switch the dynamic adjustment of the threshold on or off.

6. The sensor (10) according to any of the preceding claims,
wherein the control and evaluation unit (22) is configured to measure a current flowing in the light receiver (18) for determining the level information.

7. The sensor (10) according to claim 6,
wherein the control and evaluation unit (22) is configured for a current limiting (62) which, on the basis of the measured current, reduces a bias voltage of the light receiver (18) so that the current flowing in the light receiver (18) does not exceed a limit current which is harmful to the component.

8. The sensor (10) according to any of the preceding claims,
wherein the control and evaluation unit (22) comprises a switchable evaluation arrangement for determining the light time of flight and the level information, which can be connected to different light-receiving elements (20) or groups of light-receiving elements (20) by means of a switch (72).

9. The sensor (10) according to any of the preceding claims,
which is configured as a laser scanner, in particular as a multi-layer scanner, and which has a movable deflection unit (24), with the aid of which the light signals (34) are periodically guided through the monitoring area (14).

10. The sensor (10) according to any of the preceding claims,
wherein the light-receiving element (20) is biased with a bias voltage above a breakdown voltage and is thus operated in a Geiger mode.

11. A method for optically detecting and determining the distance of an object (16) in a monitoring area (14), wherein a light transmitter (12) transmits a light signal (34), a light receiver (18), which has at least one light-receiving element (20) that in particular is biased with a bias voltage above a breakdown voltage and is thus operated in a Geiger mode, generates a received signal from the remitted light signal (38) remitted by the object (16), a light time of flight and thus the distance of the object (16) is determined from the received signal and to that end the received signal is evaluated with a threshold, wherein a level information of the received signal is determined and the threshold is dynamically adjusted by means of the level information and wherein the received signal is fed to a low-pass filter (66) before the level information is determined,
**characterized in that** the level information is detected from the received signal as an extraneous light signal in a transmission pause when the light transmitter (12) is inactive, so that there is no superposition with useful light, and for the dynamic threshold adjustment the level information is added analogously to the threshold, the level information being linearly adjusted beforehand by means of a potentiometer or divided down by means of a potentiometer.

## Revendications

1. Capteur optoélectronique de mesure de distance (10) pour détecter et déterminer la distance d'un objet (16) dans une zone de surveillance (14), comprenant un émetteur de lumière (12) pour l'émission d'un signal lumineux (34), un récepteur de lumière (18) avec au moins un élément de réception de lumière (20) pour générer un signal de réception à partir du signal lumineux (38) émis par l'objet (16) ainsi qu'une unité de commande et d'évaluation (22) configurée pour déterminer un temps de vol de la lumière et donc la distance de l'objet (16) par rapport au signal de réception et d'évaluer pour cela le signal de réception avec un seuil pour déterminer un temps de réception, l'unité de commande et d'évaluation (22) étant en outre configurée pour déterminer une information de niveau du signal de réception et pour adapter dynamiquement le seuil à l'aide de l'information de niveau, et l'unité de commande et d'évaluation (22) comprend un filtre passe-bas (66) auquel le signal de réception est alimenté avant la détermination de l'information de niveau,
**caractérisée en ce que**
l'unité de commande et d'évaluation (22) est configurée pour détecter l'information de niveau du signal de réception en tant que signal lumineux ambiant dans une pause d'émission lorsque l'émetteur de lumière (12) est inactif, afin qu'il n'y ait pas de superposition avec la lumière utile,
et pour l'adaptation dynamique du seuil, d'additionner l'information de niveau au seuil de manière analogue, dans lequel l'information de niveau étant au préalable adaptée linéairement à l'aide d'un potentiomètre ou divisée par le bas à l'aide d'un potentiomètre.

2. Capteur (10) selon la revendication 1,
dans lequel l'unité de commande et d'évaluation (22) comprend un chemin d'un temps de vol de la lumière avec une unité de numérisation (58) qui numérise le signal de réception sur la base du seuil, dans lequel le chemin du temps de vol de la lumière comprend en particulier un premier filtre passe-haut (56).

3. Capteur (10) selon la revendication 2,
dans lequel l'unité de numérisation (58) est configurée comme un comparateur avec une première entrée et une deuxième entrée, dans lequel le signal de réception est appliqué à la première entrée et le seuil est appliqué à la deuxième entrée.

4. Capteur (10) selon la revendication 3,
dans lequel l'unité de commande et d'évaluation (22) est configurée pour appliquer un seuil de base à la deuxième entrée et pour décaler le seuil de base de l'information de niveau au seuil adapté dynamiquement.

5. Capteur (10) selon l'une des revendications précédentes,
dans lequel l'unité de commande et d'évaluation (22) est configurée pour activer ou désactiver l'adaptation dynamique du seuil.

6. Capteur (10) selon l'une des revendications précédentes,
dans lequel l'unité de commande et d'évaluation (22) est configurée pour mesurer un courant circulant dans le récepteur de lumière (18) pour la détermination de l'information de niveau.

7. Capteur (10) selon la revendication 6,
dans lequel l'unité de commande et d'évaluation (22) est configurée pour une limitation de courant (62) qui, à l'aide du courant mesuré, abaisse une tension de polarisation du récepteur de lumière (18) pour que le courant circulant dans le récepteur de lumière (18) ne dépasse pas un courant limite qui est nocif pour le composant.

8. Capteur (10) selon l'une des revendications précédentes,
dans lequel l'unité de commande et d'évaluation (22) comprend un dispositif d'évaluation commutable pour la détermination du temps de vol de la lumière et l'information de niveau, qui peut être connecté à différents éléments de réception de lumière (20) ou groupes d'éléments de réception de lumière (20) au moyen d'un commutateur (72).

9. Capteur (10) selon l'une des revendications précédentes,
qui est configuré comme un scanner laser, en particulier comme un scanner multicouche, et qui comprend une unité de déviation mobile (24), à l'aide de laquelle les signaux lumineux (34) sont guidés périodiquement à travers la zone de surveillance (14).

10. Capteur (10) selon l'une des revendications précédentes,
dans lequel l'élément de réception de lumière (20) est accouplé avec une tension de polarisation supérieure à une tension de claquage et fonctionne donc en mode Geiger.

11. Procédé de détection optique et de détermination de la distance d'un objet (16) dans une zone de surveillance (14), dans lequel un émetteur de lumière (12) émet un signal lumineux (34), un récepteur de lumière (18), qui comprend au moins un élément de réception de lumière (20) qui est en particulier polarisé avec une tension de polarisation supérieure à une tension de claquage et qui fonctionne ainsi en mode Geiger, génère un signal de réception à partir du signal lumineux émis (38) par l'objet (16), un temps de vol de la lumière et donc la distance de l'objet (16) sont déterminés à partir du signal de réception, et le signal de réception est évalué pour cela avec un seuil, dans lequel une information de niveau du signal de réception est déterminée et le seuil est adapté dynamiquement à l'aide de l'information de niveau et dans lequel le signal de réception est alimenté à un filtre passe-bas (66) avant la détermination de l'information de niveau,
**caractérisé en ce que**
l'information de niveau est détectée du signal de réception en tant que signal lumineux ambiant dans une pause d'émission lorsque l'émetteur de lumière (12) est inactif, afin qu'il n'y ait pas de superposition avec la lumière utile, et pour l'adaptation dynamique du seuil, l'information de niveau est additionnée au seuil de manière analogue, dans lequel l'information de niveau étant au préalable adaptée linéairement à l'aide d'un potentiomètre ou divisée par le bas à l'aide d'un potentiomètre.
